# EUROPÄISCHE PATENTSCHRIFT

(11) **EP 2 830 125 B1**
(45) Veröffentlichungstag und Bekanntmachung des Hinweises auf die Patenterteilung: **10.08.2016**
(21) Anmeldenummer: 13177438.2
(22) Anmeldetag: 22.07.2013
(51) Int. Cl.: H01M 2/14, H01M 2/16, H01M 10/0525

(54) **Separator für elektrochemische Zelle und Verfahren zu seiner Herstellung**
Separator for an electrochemical cell and method for producing the same
Séparateur pour une cellule électrochimique et son procédé de fabrication

(43) Veröffentlichungstag der Anmeldung: 28.01.2015
(73) Patentinhaber: Sihl GmbH, 52355 Düren (DE)
(72) Erfinder: Niemöller, Axel, 52355 Düren (DE); Schäfer, Manfred, 50823 Köln (DE)
(74) Vertreter: f & e patent

(56) Entgegenhaltungen:
- WO-A1-2013/107911
- DE-A1- 19 612 769
- US-A1- 2008 245 735
- US-A1- 2012 321 933

## Beschreibung

Die vorliegende Erfindung betrifft einen Separator für eine elektrochemische Zelle, vorzugsweise eine Lithium-Ionen-Batterie, umfassend eine poröse Schicht, welche mindestens ein organisches Bindemittel und mindestens ein funktionalisiertes Aluminiumoxidhydroxid der allgemeinen Formel AlOOH umfasst, das an seiner Oberfläche mit mindestens 2,5 Gew.-% mindestens einer siliziumhaltigen organischen Verbindung funktionalisiert ist, bezogen auf das Gewicht von Aluminiumoxidhydroxid, ein Verfahren zur Herstellung eines solchen Separators, eine Beschichtungszusammensetzung zur Herstellung eines solchen Separators sowie eine Lithium-Ionen-Batterie, umfassend einen solchen Separator. Die erfindungsgemäßen Separatoren zeichnen sich durch eine schnelle Flüssigkeitsaufnahme, hohe Porosität, gute mechanische Festigkeit und sehr geringe Schrumpfung unter thermischer Belastung aus. Eine wesentliche Verbesserung der Sicherheit von heute üblichen Lithium-Ionen-Batterien ist damit möglich. Darüber hinaus können die Separatoren auch in einem kommerziellen Maßstab in einem kostengünstigen Beschichtungsverfahren hergestellt werden.

Lithium-Ionen-Batterien sind weit verbreitet, z.B. in Mobiltelefonen, Laptop-Rechnern und elektrisch betriebenen Werkzeugen. In letzter Zeit werden allerdings zunehmend Sicherheitsrisiken derartiger Batterien bekannt, die bis zur explosionsartigen Zerstörung der Batterien führen können. Andererseits erscheint die Lithium-Ionen-Technologie für Batterien zukünftiger Elektrofahrzeuge wegen ihrer hohen Energiedichte und Leistung prädestiniert. Eine zwingende Anforderung an die Antriebstechnik künftiger Elektrofahrzeuge sind jedoch kostengünstige und sichere Komponenten.

Separatoren sind poröse Elemente, üblicherweise in Form von Folien, zur Trennung der chemischen Reaktionen an Anode und Kathode in einer Batterie und ein wesentliches Sicherheitselement, um einen Kurzschluss in den Batterien zu verhindern. Aus dem Stand der Technik sind sowohl Separatoren bekannt, die als Beschichtung direkt auf die Anode und/oder die Kathode aufgebracht sind, als auch freitragende Separatoren, die nicht als Beschichtung auf eine der Elektroden aufgebracht sind, sondern ein selbstständiges Bauteil der Batterie darstellen.

Die Anforderungen an einen stabilen, die notwendige Sicherheit gewährleistenden Separator sind vielfältig und umfassen eine möglichst geringe Dicke, gute elektrische Isolation bei gleichzeitig hohem Ionentransport, hohe Reißfestigkeit und Dehnbarkeit, elektrochemische Stabilität, hohe Porosität bei definiertem Porendurchmesser, gute Benetzbarkeit mit organischen Elektrolyten, chemische wie mechanische Beständigkeit auch bei hohen Temperaturen sowie Dimensionsstabilität.

Bisherige Separatoren bestehen oft aus schmelzbaren Kunststoffen, die entweder zu Folien extrudiert oder gegossen werden. Um feine Poren in diesen Kunststoffen zu erzeugen, werden diese z.B. gestreckt, wobei die Kunststoffe aufreißen und eine Porosität von 30-60 % erzeugt wird. Üblich sind Separatoren auf Basis von Polypropylen (Schmelzpunkt ca. 150-165 °C), Polyethylen (Schmelzpunkt ca. 110-135 °C) oder Mischungen derselben. Weiterhin sind poröse Kunststoffseparatoren auf Basis von PVDF (Polyvinylidenfluorid) bspw. aus US 2010/0183907 bekannt.

Ein gravierender Nachteil derartiger Polyolefinseparatoren ist deren geringe thermische Belastbarkeit selbst bei Temperaturen unterhalb der Schmelztemperatur. Bei Polyethylenseparatoren führt schon ein kurzzeitiges Erhitzen auf 100 °C, eine Temperatur unterhalb des Schmelzpunkts der Polymers, zu einem Schrumpfen des Separators und kann zu einem Kurzschluss in der elektrochemischen Zelle führen, so dass derartige Separatoren nicht als sicher einzustufen sind.

Bekannt sind ferner auch Separatoren auf Basis anorganischer Vliesstoffe, wie z.B. Vliesen aus Glas- oder Keramikmaterialien oder auch Keramikpapieren. Diese sind zwar temperaturstabil, aber oft mechanisch unbeständig, was die Lebensdauer entsprechender Batterien verkürzt.

Im Stand der Technik wurden daher diverse Versuche unternommen, die Eigenschaften von Separatoren auf Basis von organischen Polymeren mit denen von Separatoren auf Basis anorganischer Materialien zu kombinieren. Zum einen sind bspw. in WO 2004/021476 A1 Separatoren beschrieben, in denen auf ein Vlies aus polymerem organischen Material, ggf. mittels geeigneter Haftvermittler, eine separate anorganische keramische Beschichtung aufgebracht wird. Da die dort beschriebenen keramischen Schichten kein polymeres organisches Bindemittel enthalten, sind sie vergleichsweise spröde und als Separatoren für gewickelte Zellen eher nicht geeignet.

Es wurden daher auch Versuche unternommen, die Eigenschaften von Separatoren auf Basis organischer Polymere mit denen von Separatoren auf Basis anorganischer Materialien in einer Schicht zu kombinieren. So sind bspw. aus dem Stand der Technik Separatoren bekannt, die eine Mischung eines Polymers wie Polyvinylalkohol (PVA) mit Aluminiumoxiden oder-hydroxiden als freitragenden Separator (US 6,153,337 B1) oder eine Mischung eines Polymers wie Polyvinylidenfluorid (PVDF) und eines anorganisches Pigments, wie bspw. Silika oder Aluminiumoxid, als Beschichtung auf einem herkömmlichen Polypropylenseparator enthalten (US 6,723,467 B2).

Ein grundsätzliches Problem von Separatoren auf Basis anorganischer Materialien, z.B. anorganischen Oxiden, ist ein Wassereintrag durch oberflächlich adsorbiertes Wasser in die elektrochemische Zelle. Aus diesem Grund wurde beispielsweise in US 2011/0003209 A1 die Hydrophobierung der Oberflächen anorganischer Partikel durch Behandlung derselben mit geringen Mengen eines Hydrophobierungsmittels beschrieben, welches unter anderem geringe Menge eines Silans umfassen kann, um die Wasseraufnahme der entsprechenden Schicht des Separators zu begrenzen.

Diese bisher aus dem Stand der Technik bekannten Separatoren stellen jedoch stets nur einen Kompromiss zwischen den verschiedenen gewünschten Eigenschaften dar, wie bspw. Ionenleitfähigkeit, Festigkeit, Dehnbarkeit, Schrumpfverhalten, Temperaturbeständigkeit, chemische Inertheit und kostengünstige Herstellung.

Um eine gute Dispergierbarkeit von Aluminiumoxid oder -hydroxid-Partikeln auch in aprotischen organischen Lösungsmitteln zu erzielen, wurde in WO 2012/011944 A2 eine Modifizierung dieser Partikel mit organischen Sulfonsäuren vorgeschlagen. Die unter Verwendung dieser Partikel hergestellten Separatoren zeigen eine Reihe vorteilhafter Eigenschaften. Unter bestimmten Bedingungen kann es jedoch in elektrochemischen Zellen, die derartige Separatoren enthalten, zu unerwünschten Nebenreaktionen durch die Migration der zur Oberflächenmodifizierung eingesetzten Säuren kommen. Weiterhin kann bei der Verwendung aromatischer Sulfonsäuren unter bestimmten Bedingungen eine gelblich bis bräunliche Verfärbung der Separatoren auftreten, z.B. bei der Anwendung hoher Temperaturen während der Herstellung. Dies schränkt die Verfahrensparameter des Herstellungsverfahrens ein, insbesondere auch die Möglichkeiten zur Trocknung des Separators zur Entfernung von Wasserspuren.

Aufgabe der vorliegenden Erfindung war es daher, einen Separator für elektrochemische Zellen mit hoher Porosität und guter mechanischer, thermischer und elektrochemischer Beständigkeit, insbesondere für Lithium-Ionen-Batterien, bereitzustellen sowie ein Verfahren, das eine kostengünstige Herstellung derartiger Separatoren erlaubt.

Diese Aufgabe wird gelöst durch den Separator und das Verfahren zur Herstellung eines Separators der vorliegenden Erfindung.

Die vorliegende Erfindung betrifft einen Separator für eine elektrochemische Zelle, vorzugsweise eine Lithium-Ionen-Batterie, umfassend eine poröse Schicht, welche mindestens ein organisches Bindemittel und mindestens ein funktionalisiertes Aluminiumoxidhydroxid der allgemeinen Formel AIOOH umfasst, wobei das Aluminiumoxidhydroxid an seiner Oberfläche mit mindestens 2,5 Gew.-% mindestens einer siliziumhaltigen organischen Verbindung funktionalisiert ist, bezogen auf das Gewicht von Aluminiumoxidhydroxid (berechnet als AIOOH), und das Gewichtsverhältnis von funktionalisiertem Aluminiumoxidhydroxid zu Bindemittel im Bereich von 1,5:1 bis 20:1 liegt. Hiervon ausgenommen ist ein Separator, der (i) ein lineares Styrol-Ethylen/Butylen-Styrol-(SEBS)-Triblockcopolymer mit einem Anteil an Styrol-Blöcken von 30 bis 33 Gew.-%, bezogen auf das Gesamtgewicht des Blockcopolymers und einer Lösungsviskosität von 1,4 bis 2 mPas in einer 10 Gew.-%igen Lösung in Toluol bei 25 °C, bestimmt mit Hilfe eines Brookfield-Viskosimeters Modell LVT nach Angaben des Polymerherstellers Kraton (Houston, TX, USA) für das Polymer Kraton G 1651 EU als organisches Bindemittel und (ii) ein Böhmit-Pigment mit einer Kristallitgröße von 35 - 45 nm, welches an seiner Oberfläche durch Umsetzung mit Phenylmethyldimethoxysilan bei einem Verhältnis von Böhmit zu Silan von 1,36:1 funktionalisiert wurde, bezogen auf das Gewicht der Edukte, in einem Verhältnis von funktionalisiertem Aluminiumoxidhydroxid (ii) zu organischem Bindemittel (i) von 3,57 : 1 umfasst.

Der im Rahmen der vorliegenden Erfindung verwendete Funktionalisierungsgrad des Aluminiumoxidhydroxids von mindestens 2,5 Gew.-% bezieht sich auf die Gewichtszunahme der Pigmentpartikel aufgrund der Funktionalisierung ihrer Oberfläche durch Umsetzung mit der siliziumhaltigen organischen Verbindung.

Das Gewichtsverhältnis von funktionalisiertem Aluminiumoxidhydroxid zu Bindemittel liegt bevorzugt im Bereich von 1,75:1 bis 20:1, weiterhin bevorzugt im Bereich von 2:1 bis 20:1, besonders bevorzugt im Bereich von 2,25 bis 10:1 und insbesondere im Bereich von 2,5 bis 8:1.

Die erfindungsgemäßen Separatoren weisen eine schnelle Flüssigkeitsaufnahme, hohe Porosität, gute mechanische Festigkeit, geringe thermische Schrumpfung und hohe elektrochemische Stabilität auf und können sowohl als Elektrodenbeschichtung als auch als freitragende Separatoren, optional jeweils ggf. in Kombination mit einer oder mehreren weiteren Schicht(en), eingesetzt werden. Überraschenderweise zeigen die erfindungsgemäßen Separatoren darüber hinaus aber auch eine noch höhere Stabilität als die im Stand der Technik beschriebenen Separatoren auf Basis von carbonsäure- oder sulfonsäuremodifizierten Pigmenten und zeigen mit einer Vielzahl von Flüssigkeiten, insbesondere mit organischen Lösungsmitteln mit einer Oberflächenspannung unter 60 mN/m bei 20 °C und handelsüblichen Elektrolyten für Lithiumionenbatterien, eine spontane und vollständige Benetzung. Die untere Grenze der Oberflächenspannung der Flüssigkeiten schränkt die vorliegende Erfindung nicht ein, beträgt aber üblicherweise 18 mN/m oder mehr bei 20 °C.

Aluminiumoxidhydroxid ist eine anorganische Verbindung, die auch bei Temperaturen oberhalb von 200 °C stabil ist. Der Temperaturbereich, in welchem in Separatoren kein Schmelzen bzw. keine Phasenumwandlung auftritt und die Dimensionsstabilität gegeben ist, wird somit durch die erfindungsgemäßen Separatoren erheblich erweitert. Durch die Funktionalisierung des Aluminiumoxidhydroxids mit siliziumhaltigen organischen Verbindungen wird ferner sichergestellt, dass die zur Oberflächenmodifizierung verwendeten Gruppen kovalent an die Oberfläche angebunden sind und daher Wechselwirkungen derselben mit weiteren Komponenten der Batterie, z.B. den Elektroden, unterbunden werden können. Somit wird die Sicherheit durch den Einsatz solcher Pigmente in einem Separator oder als Teil eines Separators in einer Batterie erhöht.

Überraschenderweise zeigte sich, dass die erfindungsgemäßen Separatoren auch bei Temperaturen oberhalb von 150 °C mechanisch und chemisch stabil sind und vielfach nur eine sehr geringe Schrumpfung von bevorzugt unter 2%, besonders bevorzugt unter 1%, bezogen auf die Dimension des Separators vor der thermischen Behandlung, aufweisen. Ein Schmelzen oder eine Verformung der überwiegend anorganischen porösen Schicht wird bei Temperaturen bis 150 °C und vielfach sogar bis 200 °C nicht beobachtet. Somit kann die Sicherheit von z.B. Lithiumionenbatterien durch Verwendung des erfindungsgemäßen Separators erhöht werden.

In der vorliegenden Erfindung ist es somit durch Verwendung von oberflächlich mit siliziumhaltigen organischen Verbindungen funktionalisiertem Aluminiumoxidhydroxid in Kombination mit organischen Polymeren als Bindemittel gelungen, eine Kombination hervorragender mechanischer, chemischer und elektrochemischer Eigenschaften für den Einsatz als Separator bzw. Separatorschicht in Batterien und Superkondensatoren zu erzielen.

Der erfindungsgemäße Separator lässt sich mittels bekannter Vorrichtungen und Verfahren, wie beispielsweise Walzenauftrag, zum Beispiel mit Rollrakel- oder Luftbürstendosierung, mit Tiefdruckwalzen, Messerrakel-Beschichtung (Knife-over-roll), Düsenbeschichtung oder Vorhanggießen, durch das erfindungsgemäße Verfahren kostengünstig herstellen. Bei beidseitiger Beschichtung eines funktionalen Trägermaterials ist auch eine Tauchbeschichtung vorteilhaft, um gleichzeitig beide Seiten in einem Verfahrensschritt zu beschichten. Die Verfahren können hierbei je nach Anforderung in einfacher Weise variiert und somit speziellen Anforderungen an den jeweiligen Separator angepasst werden.

Auf diese Weise kann eine weitgehend isotrope poröse Schicht erhalten werden. Unter einer isotropen Struktur / isotropen Porosität wird im Sinne der vorliegenden Erfindung verstanden, dass die Porenstruktur und die Porengröße in der Vergrößerung eines Rasterelektronenmikroskopes über die Fläche und Dicke des Separators bzw. einer Separatorschicht gleichmäßig erscheint. In einer solchen Schicht sind bevorzugt auch die mechanischen Eigenschaften weitgehend unabhängig von der Auftragsrichtung der Beschichtung im Herstellungsverfahren. Bevorzugt weichen in den erfindungsgemäßen Separatoren aufgrund der weitgehend isotropen Struktur die Werte für Reißdehnung, Bruchlast, E-Modul und/oder thermische Schrumpfung in Längsrichtung (Bahnrichtung im Beschichtungsverfahren) und Querrichtung um weniger als 30%, weiterhin bevorzugt weniger als 20% und insbesondere weniger als 10% voneinander ab, jeweils bezogen auf den niedrigeren Wert.

Der Begriff "elektrochemische Zelle" umfasst im Sinne der vorliegenden Erfindung Batterien inklusive Akkumulatoren (Sekundärbatterien) jeder Art, wie bspw. Alkali- und Erdalkali-Batterien, insbesondere Lithium-Ionen-Batterien, aber auch Superkondensatoren.

Die erfindungsgemäßen Separatoren umfassen sowohl Separatoren, die als Beschichtung direkt auf die Anode und/oder die Kathode aufgebracht sind, als auch freitragende Separatoren, die nicht als Beschichtung auf eine Elektrode aufgebracht sind, sondern ein selbstständiges Bauteil der Batterie bzw. des Superkondensators darstellen. In beiden Fällen können die erfindungsgemäßen Separatoren neben der Schicht, die das organische Bindemittel und das Aluminiumoxidhydroxid umfasst, noch weitere Schichten und / oder Materialien enthalten, wie bspw. temporäre bzw. permanente Trägermaterialien.

Geeignete Trägermaterialien werden nachfolgend näher beschrieben ebenso wie das erfindungsgemäßen Verfahren, nach welchem die erfindungsgemäßen Separatoren sowohl in Form einer Elektrodenbeschichtung als auch als freitragende Separatoren bevorzugt hergestellt werden können. Zur Herstellung eines freitragenden Separators kann die Schicht, die das organische Bindemittel und das Aluminiumoxidhydroxid (im Folgenden auch als Pigment bezeichnet) umfasst, bevorzugt zunächst auf einen temporären Träger aufgebracht werden. Nach Trocknung kann die Beschichtung dann als freitragende, feinporöse Separatorfolie vom temporären Träger abgelöst werden. Weiterhin kann die Schicht auch ein- oder beidseitig auf einen permanenten Träger, bspw. ein Vlies, ein synthetisches Papier, ein Gewebe oder eine poröse Membran, z.B. einen porösen Polyolefinseparator aufgebracht werden, auf welchem sie bei der Anwendung als Separator verbleibt.

Die Dicke der porösen Schicht, die das organische Bindemittel und das funktionalisierte Aluminiumoxidhydroxid umfasst (im Folgenden als poröse Schicht bezeichnet), kann bevorzugt 1 bis 100 µm, weiterhin bevorzugt 3 bis 50 µm und besonders bevorzugt 5 µm bis 25 µm betragen. In freitragenden Separatoren, insbesondere in solchen, die ausschließlich aus der erfindungsgemäßen Schicht bestehen und kein weiteres Trägermaterial umfassen, kann die Dicke der porösen Schicht bevorzugt 10 µm bis 50 µm und insbesondere 10 µm bis 25 µm betragen. Wird der Separator direkt als Beschichtung auf die Elektrode aufgebracht, so kann die Dicke der porösen Schicht bevorzugt 3 µm bis 50 µm und insbesondere 3 µm bis 25 µm betragen.

Die Kristallitgröße des funktionalisierten Aluminiumoxidhydroxids in der Separatorschicht beträgt bevorzugt 10 bis 250 nm, besonders bevorzugt 30 bis 150 nm.

Die Porosität des Separators, gemessen mittels Quecksilberporosimetrie, beträgt bevorzugt 30% bis 70%, weiterhin bevorzugt 40% bis 60%. Durch den Zusatz geeigneter Pigmente, Dispergiermittel, Bindemittel, Lösungsmittel, Vernetzer und/oder weiterer Hilfsstoffe kann die Porosität in gewissem Rahmen variiert werden: So führt bspw. die Erhöhung des Anteils an Bindemittel in der Regel zu einer geringeren Porosität und höherer mechanischer Festigkeit (höhere Bruchlast, höherer E-Modul). Durch die Auswahl der Lösungsmittel für die Beschichtungszusammensetzung kann die Trocknung und damit die Ausbildung einer homogenen porösen Struktur beeinflusst werden. Um eine homogene, isotrope Struktur der Beschichtung zu erreichen, sollte es nicht zu Ausfällungen, Bindermigration und Unverträglichkeiten während der Trocknung kommen, was dem Fachmann bekannt ist.

Der Porendurchmesser, auch als Porengröße bezeichnet, ermittelt mit Hilfe der Quecksilberporosimetrie entsprechend DIN 66133, der porösen Schicht beträgt bevorzugt 10 nm bis 300 nm, weiterhin bevorzugt 20 bis 275 nm, 30 bis 250 nm und 40 bis 225 nm, und insbesondere 50 bis 200 nm. Der Porendurchmesser weist bevorzugt eine möglichst enge Verteilung um einen Mittelwert auf. Insbesondere ist die Halbwertsbreite in der Porenverteilungskurve kleiner als +/- 30 % der mittleren Porengröße.

Die Luftdurchlässigkeit des Separators nach Gurley, gemessen gemäß ASTM D726-94, ist ein Maß für die Tortuosität und den Durchmesser der Poren und beträgt in dem erfindungsgemäßen Separator bevorzugt 100 bis 3000 ml/100 s, besonders bevorzugt 300 bis 2000 ml/100 s. Dies gilt sowohl für freitragende als auch für aus zwei oder mehreren Schichten zusammengesetzte Separatoren, in denen mindestens eine erfindungsgemäße Schicht enthalten ist, jeweils bezogen auf den gesamten Separator.

Das zur Herstellung des erfindungsgemäßen Separators verwendete Aluminiumoxidhydroxid bzw. mindestens eines der verwendeten Aluminiumoxidhydroxide, sofern eine Mischung von Aluminiumoxidhydroxiden verwendet wird, ist bevorzugt ausgewählt aus der Gruppe, enthaltend natürlich vorkommende und synthetische Aluminiumoxidhydroxide der allgemeinen Formel AIOOH. Dies beinhaltet Aluminiumoxidhydroxide, die als alpha- oder gamma-Aluminiumoxidhydroxid bezeichnet werden und in orthorhombischen Kristallmodifikationen vorliegen können, insbesondere als Böhmit, Pseudoböhmit oder Diaspor, oder aber auch eine amorphe Struktur aufweisen können. Bevorzugt ist das bzw. mindestens eines der Aluminiumoxidhydroxide ausgewählt aus der Gruppe, bestehend aus Diaspor, Böhmit und Pseudoböhmit, weiterhin bevorzugt aus der Gruppe, bestehend aus synthetischem Diaspor, Böhmit und Pseudoböhmit. Bevorzugt handelt es sich bei dem Aluminiumoxidhydroxid um ein synthetisches Aluminiumoxidhydroxid. Besonders bevorzugt umfasst das bzw. mindestens eines der Aluminiumoxidhydroxide mindestens ein synthetisches Böhmit.

Derartige Aluminiumoxidhydroxide können synthetisch nach unterschiedlichen, dem Fachmann bekannten Verfahren, bspw. nach dem in US 4,202,870 beschriebenen Verfahren, hergestellt werden. So kann insbesondere Böhmit in einem Sol-Gel-Verfahren durch Hydrolyse von Aluminiumalkoxiden hergestellt werden, bei dem über die Reaktionsbedingungen das Kristallitwachstum und die Eigenschaften der primären Aggregate, zu denen sich die Kristallite zusammenlagern, beeinflusst werden. Die dabei entstehenden übergeordneten porösen Strukturen bestehen beispielsweise bevorzugt aus plättchenförmigen, nadelförmigen oder blockartigen Kristalliten, die bevorzugt zu den primären Aggregaten verbunden sind. Diese Aggregate besitzen eine hohe Porosität und somit eine hohe innere Oberfläche.

Die Kristallitgröße des verwendeten Aluminiumoxidhydroxids beträgt, bestimmt mittels Reflexverbreiterung der 120-Kristallebene in der Röntgenbeugung, bevorzugt zwischen 10 nm und 250 nm, besonders bevorzugt zwischen 30 nm und 150 nm.

Besonders bevorzugt sind blockförmige und plättchenförmige Kristallite.

Die primären Aggregate können ihrerseits zu Agglomeraten zusammengelagert sein. Diese sind dispergierbar und weisen in der Beschichtungsdispersion bevorzugt eine Teilchengröße von 50 nm bis 2000 nm, weiterhin bevorzugt von 50 bis 1000 nm, besonders bevorzugt von 100 nm bis 800 nm auf. Bei Funktionalisierung ihrer Oberfläche mit siliziumhaltigen organischen Verbindungen können sie auch in organischen Lösungsmitteln dispergiert werden. Bevorzugt sind diese Sekundärpartikel (worunter nachfolgend sowohl die bereits beschriebenen Aggregate als auch Agglomerate verstanden werden) in der Dispersion deutlich kleiner als die Schichtdicke der daraus hergestellten Separatorschicht, um eine gleichmäßige Porosität zu gewährleisten. Bevorzugt ist es, dass die größte Längenausdehnung der Sekundärpartikel im Durchschnitt höchstens ein Fünftel der Dicke der Separatorschicht beträgt. Vorzugsweise weist das Aluminiumoxidhydroxid im dispergierten Zustand eine möglichst enge Teilchengrößenverteilung, ermittelt mittels Laserbeugung, auf. Dabei ist es vorteilhaft, die Sekundärpartikel möglichst vollständig zu dispergieren, so dass im Wesentlichen primäre Aggregate vorliegen. Der Teilchendurchmesser von 90 % der Teilchen sollte dabei in einem Bereich von +/-50 % vom Teilchengrößen-Mittelwert (D50) liegen. Ferner sollten die Sekundärpartikel ein möglichst großes Porenvolumen aufweisen, welches bevorzugt mehr als 0,7 ml/g, besonders bevorzugt mehr als 0,9 ml/g beträgt, gemessen mittels Quecksilber-Porosimetrie am getrockneten funktionalisierten Aluminiumoxidhydroxid gemäß DIN 66133.

Für den Einsatz als Separator in Lithium-Ionen-Batterien ist ferner eine hohe Reinheit des Aluminiumoxidhydroxids notwendig. Der Gewichtsanteil an Verunreinigungen mit anderen Elementen in dem eingesetzten Aluminiumoxidhydroxid beträgt daher pro Element bevorzugt weniger als 50 ppm, jeweils bezogen auf AlOOH.

Das verwendete Aluminiumoxidhydroxid AIOOH weist bei Normalbedingungen (23 °C; 50% relative Feuchtigkeit) je nach Größe der Oberfläche einen Anteil an physisorbiertem Wasser von 0,5 bis 10 Gew.-% auf, bezogen auf AlOOH. Dieser Anteil an physisorbiertem Wasser wird bestimmt durch Thermogravimetrie, indem das Material mit einer Geschwindigkeit von 2 °C pro Minute bis auf 1350 °C aufgeheizt wird. Dabei entsteht wasserfreies Aluminiumoxid (Al₂O₃). Der Anteil an oberflächlich adsorbiertem (physisorbiertem) Wasser ergibt sich aus der Differenz des Gesamtmassenverlust und des errechneten Massenverlustes durch Umwandlung von AlOOH zu Al₂O₃.

Die Funktionalisierung der Oberfläche des Aluminiumoxidhydroxids erfolgt durch chemische Reaktion freier Hydroxylgruppen an der Oberfläche der Pigmente, inklusive der bei porösen Feststoffen vorhandenen inneren Oberfläche. Hierbei kommt es bevorzugt zur Ausbildung kovalenter und damit stabiler Al-O-Si-Bindungen, welche selbst unter Bedingungen chemisch inert sind, unter denen bei carbonsäure- und sulfonsäuremodifizierten Pigmenten eine Ablösung dieser Säuren von der Oberfläche des Pigments beobachtet wird, z.B. beim Einwirken von Wasser oder Säuren.

Über eine Auswahl geeigneter siliziumhaltiger organischer Verbindungen und das Verfahren der Funktionalisierung kann die Oberfläche der Aluminiumoxidhydroxid-Partikel gezielt so funktionalisiert werden, dass aus diesen funktionalisierten Partikeln stabile Dispersionen in einem Lösungsmittel oder auch Lösungsmittelgemisch erzeugt werden können. Zur Dispergierung der Pigmentpartikel in Lösungsmitteln eignen sich verschiedene Verfahren der mechanischen Dispergierung, z.B. mit Perlmühlen, Zahnkolloidmühlen, Ultraschalldispergatoren und Dissolvern, wobei die Funktionalisierung der Pigmentoberfläche mit siliziumhaltigen organischen Verbindungen nicht nur die Dispergierung erleichtert, sondern auch die erhaltenen Dispersionen in entscheidendem Maße stabilisiert.

Die oder mindestens eine der zur Funktionalisierung der Oberfläche des Aluminiumoxidhydroxids verwendete(n) siliziumhaltige(n) organische(n) Verbindungen stellt bevorzugt mindestens eine Organosiliziumverbiridung dar, weiterhin bevorzugt eine mindestens Organosiliziumverbindung der Formel (I)

RₙSiX₄₋ₙ (I).

Hierin stellt R einen organischen Rest dar, der über eine Kohlenstoff-Siliziumbindung an das Siliziumatom gebunden ist und bevorzugt ausgewählt ist aus der Gruppe, enthaltend ggf. substituierte, gesättigte und ungesättigte, lineare und verzweigte, acyclische und cyclische, aliphatische sowie aromatische Kohlenwasserstoffe und Heteroaromaten, sowie fluorierte Kohlenwasserstoffe. Bevorzugt umfassen diese Reste 1 bis 20 Kohlenstoffatome und können beispielsweise Methyl, Phenyl, 4-Methylphenyl oder 4-Octylphenyl darstellen. X stellt eine Abgangsgruppe dar, die bevorzugt ausgewählt ist aus der Gruppe, bestehend aus Alkoxygruppen, Acetoxygruppen, Aminogruppen (-NR₂), und Halogeniden und beispielsweise Chlor, Dimethylamino-, Methoxy- und / oder Ethoxygruppen darstellen kann. Besonders bevorzugt sind Methoxy- oder Ethoxygruppen. Die Zahl der an das Siliziumatom über eine Kohlenstoff-Silizium-Bindung angebundenen Reste n stellt eine ganze Zahl von 1 bis 3 dar. Die einzelnen organischen Reste R und / oder Abgangsgruppen X in einer Verbindung können jeweils unabhängig voneinander gleich oder verschieden sein. Ferner ist es auch möglich, eine Mischung unterschiedlicher Organosiliziumverbindungen der obigen Formel (I) zur Funktionalisierung einer Art von Aluminiumoxidhydroxid und / oder auch Mischungen unterschiedlicher Aluminiumoxidhydroxide zu verwenden, die ihrerseits mit den gleichen oder unterschiedlichen Organosiliziumverbindungen der obigen Formel (I) oder Mischungen derselben funktionalisiert sein können. Bevorzugt können bspw. zwei oder drei Organosiliziumverbindungen zur Funktionalisierung des Aluminiumoxidhydroxids verwendet werden, die sich jeweils mindestens in einem organischen Rest R voneinander unterscheiden.

Bei Verwendung von Silanen mit zwei oder drei Abgangsgruppen pro Molekül (n=2 oder n=1) können kettenförmige oder dreidimensional vernetzte Strukturen durch die Hydrolyse aller Abgangsgruppen erzeugt werden. Dabei ist es unerheblich, ob zunächst eine Kondensation zweier oder mehrerer Silangruppen erfolgt und dann eine weitere Silanolgruppe an die Oberfläche des Aluminiumoxidhydroxids angebunden wird oder ob im ersten Schritt die Anbindung eines einzelnen Silanmoleküls an die Oberfläche erfolgt. So ist es auch möglich, vor der Zugabe von Aluminiumoxidhydroxid eine Vorkondensation eines Silans oder einer Mischung unterschiedlicher Silane vorzunehmen und diese dann im zweiten Schritt mit dem Aluminiumoxidhydroxid-Pigment reagieren zu lassen. Durch Verwendung von mehreren Abgangsgruppen ist auch eine Mehrfachbindung eines Silanmoleküls an die Oberfläche des Aluminiums möglich, indem eine Reaktion mit mindestens zwei Hydroxylgruppen der Oberfläche erfolgt.

Bevorzugt werden Silane mit zwei Abgangsgruppen pro Molekül (n=2) eingesetzt. Hierdurch wird der Anteil an nicht an die Oberfläche gebundenem Silan minimiert, welches anderenfalls bei der Auftragung einer entsprechenden Dispersion auf ein Trägermaterial zu Fehlstellen in der Beschichtung und somit zu Benetzungsstörungen im Separator führen kann.

Weiterhin sind Silane und Silazane mit zwei oder mehreren Silizium-Atomen pro Molekül geeignet, wenn sie, wie oben beschrieben, ein oder mehrere Abgangsgruppen und organische Reste aufweisen. Zu dieser Substanzklasse gehören zum Beispiel sogenannte "dipodale" Silane, die zwei endständige Silanolgruppen in einem Molekül enthalten, welche beide an die Pigmentoberfläche gebunden werden können, wie beispielsweise 1,2-Bis(trimethoxysilyl)decan, Bis(triethoxysilyl)ethan und Bis(3-trimethoxysilylpropyl)amin. Weitere zur Funktionalisierung geeignete Substanzklassen sind cyclische Azasilane und Disilazane.

Durch die Wahl der zur Funktionalisierung verwendeten siliziumhaltigen organischen Verbindung kann die Dispergierbarkeit des oberflächlich funktionalisierten Aluminiumoxidhydroxid-Pigmentes in einem Lösungsmittel oder Lösungsmittelgemisch optimiert werden. Um eine gute Dispergierbarkeit des funktionalisierten Aluminiumoxidhydroxids in unpolaren Lösungsmitteln wie Benzinen oder Toluol zu erreichen, werden als organische Reste R bevorzugt unpolare Gruppen, wie Alkylgruppen mit einer Kettenlänge von vier oder mehr Kohlenstoffatomen und / oder ggf. alkylsubstituierte Phenylgruppen verwendet. Sollen polarere organische Lösungsmittel in der Beschichtungszusammensetzung eingesetzt werden, werden bevorzugt Alkylgruppen mit einer Kettenlänge von drei oder weniger Kohlenstoffatomen, wie z.B. Propyl- oder Methyl-Gruppen eingesetzt. Insbesondere kann eine Optimierung der Dispergierbarkeit der Pigmente erreicht werden, wenn unterschiedliche Silane, insbesondere Silane unterschiedlicher Kettenlänge, in Kombination eingesetzt werden.

Als organische Reste R kommen bspw. Methyl-, Ethyl-, Propyl-, n-Butyl-, i-Butyl-, t-Butyl-, Pentyl-, Hexyl-, Heptyl-, n-Octyl-, i-Octyl, Decyl-, Undecyl-, Dodecyl-, Tetradecyl-, Hexadecyl-, Octadecyl-, Eicosyl-, Cyclopentyl-, Cyclopentenyl-, Cyclohexyl-, Phenyl-, Benzyl-, Phenethyl-, 4-Phenylbutyl-, 3-Phenylpropyl-, Phenoxypropyl-, 6-Phenylhexyl-, p-Tolyl-, Ethylphenethyl-, Naphthyl-, p-Nonylphenoxypropyl-, 3,3,3-Trifluoropropyl-, Nonafluorohexyl-,Tridecafluoro-1,1,2,2-tetrahyddrooctyl- und Heptadecafluoro-1,1,2,2-tetrahydrodecyl-Gruppen in Betracht. Sind mehrere Gruppen organische Reste R pro Molekül der Organosiliziumverbindung (n>1) vorhanden, stellen der zweite und ggf. der dritte Rest R bevorzugt eine Methylgruppe dar.

Zur Funktionalisierung eingesetzt werden können beispielsweise bevorzugt Silane mit hydrophoben Gruppen R, die ausgewählt sind aus der Gruppe, bestehend aus Methyltrichlorosilan, Dimethyldichlorosilan, Trimethylchlorosilan, Octyltrichlorosilan, Octylmethyldichlorosilan, Octyldimethylchlorosilan, Dodecyltrichlorosilan, Dodecylmethyldichlorosilan, Dodecyldimethylchlorosilan, Trimethylmethoxysilan, Phenylmethyldimethoxysilan, Phenyltrimethoxysilan, Dodecyltrimethoxysilan, Dodecylmethyldimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)-methyldimethoxysilan, Dicyclopentyldimethoxysilan, Phenyltriethoxysilan, Methyltriacetoxysilan, Dimethyldiacetoxysilan, Ethyltriacetoxysilan, aber auch Silane mit funktionalisierten organischen Resten R wie N-(2-Aminoethyl)-3-aminopropyltrimethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)-propyltriethoxysilan, N-(2-Aminoethyl)-3-aminopropylmethyldimethoxysilan, 3-Aminopropyltrimethoxysilan, 3-Ureidopropyltrimethoxysilan, Vinyltrimethoxysilan, Vinyldimethoxymethylsilan, Vinyltriethoxysilan, Vinyltriacetoxysilan, 3-Methacryloxypropyltrimethoxysilan, (Methacryloxymethyl)methyldimethoxysilan, Methacryloxymethyltrimethoxysilan, 3-Methacryloxypropyltriacetoxysilan, 3-Isocyanatopropyltriethoxysilan, N-Methyl[3-(trimethoxysilyl)propyl]carbamat, N-Trimethoxysilylmethyl-O-methylcarbamat, N-Dimethoxy-(methyl)silylmethyl-O-methylcarbamat, Tris-[3-(trimethoxysilyl)propyl]-isocyanurat, 3-Glycidoxypropyltrimethoxysilan, 3-Glycidoxypropyltriethoxysilan und Mischungen derselben. Besonders bevorzugt werden zur Funktionalisierung Silane eingesetzt, die ausgewählt sind aus der Gruppe, bestehend aus Dimethyldimethoxysilan, Octylmethyldimethoxysilan, Octyltrimethoxysilan, 3-Methacryloxypropyltrimethoxysilan, 3-Aminopropyltriethoyxsilan, Phenylmethyldimethoxysilan und Mischungen derselben.

Insbesondere durch die Verwendung von Gemischen unterschiedlicher Silane kann eine gezielte Optimierung unterschiedlicher Eigenschaften der mit diesem Silangemisch funktionalisierten Aluminiumoxidhydroxide vorgenommen werden, unter anderem auch deren Dispergierbarkeit in Lösungsmitteln. So sind z.B. Mischungen aus Dodecylmethyldimethoxysilan oder Octylmethyldimethoxysilan, Dimethyldimethoxysilan und Phenylmethyldimethoxysilan für die Dispergierung in Toluol und Mischungen aus Dimethyldimethoxysilan und Phenylmethyldimethoxysilan für die Dispergierung in polaren Lösungsmitteln wie Methylethylketon (MEK) geeignet.

Der Grad der Funktionalisierung des Aluminiumoxidhydroxids kann in einem weiten Bereich variiert werden. Bevorzugt ist das Aluminiumoxidhydroxid an seiner Oberfläche mit mindestens 2,5 bis 80 Gew.-%, bevorzugt 3 bis 30 Gew.-% und insbesondere 4 bis 20 Gew.-% mindestens einer siliziumhaltigen organischen Verbindung funktionalisiert, bezogen auf das Gewicht von unfunktionalisiertem Aluminiumoxidhydroxid (berechnet als AlOOH). Je geringer die Größe der verwendeten Kristallite ist, desto größer ist die Oberfläche pro Gewichtseinheit des Aluminiumoxidhydroxids und desto größer sollte die Menge der zur Funktionalisierung verwendeten siliziumhaltigen organischen Verbindung sein.

Werden siliziumhaltige organische Verbindungen mit mehr als einer Abgangsgruppe pro Molekül (n ≤ 2 in der Struktur gemäß der obigen Formel (I)) verwendet, wird bevorzugt jede dieser Abgangsgruppen umgesetzt. Dies kann je nach Wahl der Reaktionsbedingungen zur Ausbildung kettenförmiger oder dreidimensional vernetzter Si-O-Si- und Al-O-Si-Strukturen auf der Oberfläche der Pigmente führen. Vorzugsweise werden die Reaktionsbedingungen so gewählt, dass der Anteil der nicht an die Oberfläche des Pigments gebundenen Siloxan-Verbindungen möglichst gering ist, da diese Nebenprodukte nicht zur Dispergierung des Pigments beitragen. Um nicht an die Oberfläche angebundenes Silan oder Reaktionsprodukte wie Oligo- und Poly(organo)siloxane zu entfernen, kann das funktionalisierte Pigment vor dem Einsatz in der Beschichtungsdispersion gereinigt werden, z.B. durch Extraktion mit einem geeigneten Lösungsmittel.

Das molare Verhältnis von AIOOH : Silan, welches bei der Verwendung von Silanen der obigen allgemeinen Formel (I) identisch ist zum atomaren Verhältnis Al : Si, hängt vom Molekulargewicht der zur Funktionalisierung verwendeten siliziumhaltigen organischen Verbindung und dem Funktionalisierungsgrad ab und liegt bevorzugt zwischen 2:1 und 500:1, besonders bevorzugt zwischen 2,5:1 und 200:1.

Das Verhältnis von Al : Si kann analytisch beispielsweise durch Elementaranalyse und spektroskopisch mittels ICP-OES (Inductively Coupled Plasma-Optical Emission Spectrometry) oder mittels Röntgenfluoreszenz ermittelt werden.

Zur Funktionalisierung der Pigmentoberfläche mit siliziumhaltigen organischen Verbindungen gibt es verschiedene Verfahren, die grundsätzlich aus dem Stand der Technik bekannt sind, bspw. die Modifikation in alkoholischer oder wässriger Lösung, Modifikation durch Aufsprühen auf das pulverförmige Pigment mit anschließender Hochleistungs-Mischung oder Modifikation in wasserfreier organischer Phase unter Verwendung wasserfreier organischer Lösungsmittel wie z.B. Toluol, Xylol, THF oder weiterer Kohlenwasserstoffe bzw. Mischungen derselben.

Bevorzugt kann das Verfahren des Aufsprühens verwendet werden, in welchem eine Lösung der siliziumhaltigen organischen Verbindung auf ein für 1 Stunde bei 100 °C und Normaldruck (p = 1.013,25 hPa) vorgetrocknetes feinteiliges Aluminiumoxidhydroxid möglichst gleichmäßig aufgesprüht wird und bei einer geeigneten Temperatur zur Reaktion gebracht wird. Bspw. kann eine 25 Gew.-%ige Lösung eines Silans oder Silangemisches in Alkohol, bspw. Ethanol, in der für die Oberflächenfunktionalisierung benötigten Silanmenge gleichmäßig durch Versprühen auf das Pigment aufgebracht werden, wobei das erhaltene Gemisch anschließend in einem Feststoffmischer für einige Stunden intensiv durchmischt wird, bspw. in einem Doppelkegeltrommelmischer (twin cone mixer with intensifier). Anschließend wird das Pigment auf einem Band oder in Wannen bei erhöhter Temperatur, z.B. 100 °C für 24 Stunden erhitzt, wodurch die Reaktion zwischen Silan und der Oberfläche des Aluminiumoxidhydroxids vervollständigt wird.

Besonders bevorzugt wird eine Funktionalisierung in wasserfreier organischer Phase unter Verwendung wasserfreier organischer Lösungsmittel vorgenommen. Das Pigment wird hierbei zunächst bei 120 °C für 4 Stunden bei Normaldruck vorgetrocknet und anschließend für mehrere Stunden in dem mit der siliziumhaltigen organischen Verbindung versetzten Lösungsmittel zum Rückfluss erhitzt. Auch Lösungsmittelgemische können hierbei verwendet werden, um die Löslichkeit der zur Funktionalisierung verwendeten siliziumhaltigen organischen Verbindung(en) und/oder die Dispergierbarkeit des Pigments sowie die Siede- bzw. Verdampfungseigenschaften des Lösungsmittels zu optimieren.

Nach erfolgter Funktionalisierung des Aluminiumoxidhydroxids können ein oder mehrere Schritte zur Aufarbeitung des Reaktionsgemisches vorgenommen werden, wie beispielsweise Aufkonzentrieren der Pigmentdispersion zur anschließenden direkten Weiterverarbeitung derselben, Abdampfen des Lösungsmittels zur Gewinnung von festem funktionalisiertem Pigment, welches zu einem beliebigen späteren Zeitpunkt redispergiert werden kann, z.B. in einem anderen Lösungsmittel, Verdünnung mit einem oder mehreren Lösungsmitteln, z.B. einem anderem als dem zur Funktionalisierung verwendeten Lösungsmittel(gemisch), Abtrennung von nicht umgesetzten und/oder nicht an die Oberfläche des Pigments gebundenen siliziumhaltigen organischen Verbindungen, z.B. mittels Extraktion, Waschschritten etc., oder Kombinationen dieser Schritte.

Wie bereits beschrieben, können die auf diese Weise an ihrer Oberfläche funktionalisierten Pigmente in einem Lösungsmittel oder Lösungsmittelgemisch dispergiert werden, welches auf die Art der Funktionalisierung abgestimmt werden kann. Hierfür wird das aus der oben beschriebenen Funktionalisierungsreaktion erhaltene, vordispergierte oder vorgetrocknete Pigment in dem Lösungsmittel(gemisch) zunächst grob dispergiert und danach mittels einer Dispergiereinrichtung, z.B. einer Perlmühle, einer Zahnkolloidmühle, eines Mischers mit hohen Scherkräften oder mittels Ultraschall fein dispergiert. Dabei entstehen stabile Dispersionen, deren mittlere Teilchengröße, gemessen mittels Laserstreuung, bevorzugt von 50 bis 2000 nm, weiterhin bevorzugt von 50 bis 1000 nm und besonders bevorzugt von 100 bis 800 nm liegt und die eine monomodale Teilchengrößenverteilung aufweisen sollten.

Auf diese Weise werden stabile Dispersionen der beschriebenen funktionalisierten AluminiumoxidhydroxidPigmente erhalten, die zur Herstellung der erfindungsgemäßen homogen porösen und fehlstellenfreien Separatoren bzw. Separatorschichten erforderlich sind.

Als Lösungsmittel sind insbesondere organische Lösungsmittel und Gemische von organischen Lösungs-mitteln geeignet, die das ausgewählte organische Bindemittel lösen und eine stabile Dispersion der funktionalisierten Pigmentpartikel ermöglichen. Geeignete Lösungsmittel sind insbesondere organische Lösungsmittel mit einem Siedepunkt von etwa 60 °C bis etwa 250 °C, wie Alkohole, Ester, Ether, Ketone, Amide, aliphatische und aromatische Lösungsmittel sowie Mischungen derselben. Besonders bevorzugt sind Methanol, Ethanol, Isopropanol, n-Propanol, Butanol, Diethylether, Propylenmonomethylether, Aceton, Methylethylketon, Methylisobutylketon, Essigsäureethylester, Essigsäurebutylester, N-Methylpyrrolidon (NMP), N-Ethylpyrrolidon (NEP), Dimethylacetamid (DMAc), Dimethylformamid (DMF), Hexamethylphosphorsäuretriamid (HMPT), Toluol, Xylol, Benzol, Hexan, Heptan, Octan, Benzine mit definiertem Siedebereich und Mischungen derselben. Um die Löslichkeits- und Verdunstungseigenschaften zu optimieren, sind Lösungsmittelgemische besonders geeignet.

Je nach Art des verwendeten organischen Bindemittels sind ggf. spezielle Lösungsmittel oder Lösungsmittelgemische erforderlich, um dieses hinreichend in Lösung zu bringen. Beispielsweise sind für fluorierte organische Polymere wie PVDF oder dessen Copolymere, z.B. mit Hexafluorpropen, Tetrafluorethylen, Vinylfluorid, Ethylen und / oder (Meth)acrylaten, Lösungsmittel wie Aceton, N-Methylpyrrolidon (NMP), N-Ethylpyrrolidon (NEP), Dimethylacetamid (DMAc), Hexamethylphosphorsäure-triamid (HMPT), Glykolester, z.B. Propylenglykolmonomethylester, Dioxan, Dimethylformamid (DMF) und / oder Dimethylcarbonat geeignet. Für ein bestimmtes (Co-)Polymer oder eine (Co-)Polymermischung geeignete Lösungsmittel sind dem Fachmann bekannt und können darüber hinaus auch in einfachen Vorversuchen ermittelt werden. Entsprechend der Löslichkeit des organischen Bindemittels und der optimalen Dispergierung der funktionalisierten Pigmentpartikel kann es vorteilhaft und somit bevorzugt sein, in einem ersten Schritt unter Verwendung der für diesen Zweck jeweils geeigneten Lösungsmittel(-gemische) zunächst eine Lösung des organischen Bindemittels in einem ersten Lösungsmittel(gemisch) und eine separate Dispersion der funktionalisierten Pigmentpartikel in einem weiteren Lösungsmittel(gemisch) herzustellen und erst in einem zweiten Schritt die Pigmentdispersion mit der Bindemittellösung zu mischen. Nach optionaler Zugabe weiterer Komponenten wird auf diese Weise eine stabile Beschichtungszusammensetzung erhalten, die zur Herstellung der erfindungsgemäßen Separatorschicht geeignet ist.

Als organische Bindemittel sind in organischen Lösungsmitteln lösliche Polymere geeignet, die mit der oben beschriebenen Pigmentdispersion zu einer stabilen Beschichtungszusammensetzung vermischbar sind und in dieser Mischung nicht zu Ausfällungen oder einer Phasentrennung führen.

Um eine gute Abbindung der Pigmentpartikel mit einer möglichst geringen Menge an organischem Bindemittel und somit eine hohe Porosität in dem Separator zu erreichen, sollte das Bindemittel ein möglichst hohes Molekulargewicht aufweisen. Bevorzugt sollte das gewichtsmittlere Molekulargewicht mehr als 50.000 g/mol, weiterhin bevorzugt mehr als 100.000 g/mol und besonders bevorzugt mehr 200.000 g/mol betragen. Für eine hinreichende mechanische Festigkeit der Separatorschicht, insbesondere wenn es sich um einen freitragenden Separator handelt, sollte der Anteil des organischen Bindemittels hingegen nicht zu gering sein. Über die Menge des organischen Bindemittels in der Schicht kann also eine Optimierung der Porosität und Festigkeit der Separatorschicht erfolgen. Hierbei beträgt das Gewichtsverhältnis des funktionalisierten Aluminiumoxidhydroxids zu dem organischen Bindemittel bevorzugt 1,5:1 bis 20:1. Insgesamt sollte der organische Anteil in der Beschichtung, umfassend das organische Bindemittel und die an die Pigmentoberfläche angebundene siliziumhaltige organische Verbindung, bevorzugt 50 Gew.-%, bezogen auf das Gesamtgewicht der porösen Schicht aus funktionalisiertem Aluminiumoxidhydroxid und organischem Bindemittel, nicht überschreiten.

Bevorzugt beträgt der Anteil an Aluminiumoxidhydroxid, berechnet als AIOOH, bezogen auf das Gesamtgewicht der Schicht aus organischem Bindemittel und funktionalisiertem Aluminiumoxidhydroxid, mindestens 50 Gew.-%, bevorzugt mindestens 60 Gew.-% und besonders bevorzugt mindestens 70 Gew.-%.

Grundsätzlich eignen sich als organische Bindemittel eine Reihe unterschiedlicher Polymere. Bei der Auswahl ist darauf zu achten, dass die chemische Stabilität im Batterieelektrolyten und die elektrochemische Stabilität in der Batterieanwendung gegeben ist. Um die Elastizität der Beschichtung und eine effektive Abbindung der Pigmentpartikel zu gewährleisten, ist eine Glasübergangstemperatur T_{g} von maximal 70 °C anzustreben, bevorzugt von weniger als 70 °C, besonders bevorzugt von weniger als 50 °C, sofern es sich nicht um ein nachfolgend näher beschriebenes Blockcopolymer handelt. Polymere mit zu hoher Glasübergangstemperatur führen zu brüchigen Beschichtungen oder binden das funktionalisierte Pigment nicht hinreichend ab. Auch teilkristalline Polymere, wie bspw. PVDF, können vorteilhaft seien, da die partielle Kristallisation dem Separator zusätzliche Festigkeit verleiht. Weiterhin kann durch eine Vernetzung der Polymerketten eine gezielte Optimierung der mechanischen Eigenschaften vorgenommen werden, wie nachfolgend näher beschrieben werden wird.

Bevorzugt sind die verwendeten (Co-)Polymere nicht in typischen Batterieelektrolyten für Lithium-Ionen-Batterien, wie bspw. einer 1:1 (w/w) Mischung aus Ethylencarbonat und Dimethylcarbonat mit 1 mol/l Lithiumhexafluorophosphat, bei Temperaturen bis 60 °C löslich.

Diese Voraussetzungen sind unter anderem gegeben bei fluorierten (Co)Polymeren, insbesondere den Homo- und Copolymeren von Vinylfluorid, Vinylidenfluorid, Tetrafluorethylen, Trifluorchlorethylen, Hexafluorpropen, Vinylfluorid mit ggf. nicht-fluorierten Co-Monomeren, z.B. Ethylen oder (Meth)acrylaten. Solche Polymere werden beispielsweise auch für die Abbindung von aktivem Kathoden- oder Anodenmaterial eingesetzt, z.B. Homopolymere aus Vinylidenfluorid oder Copolymere aus Vinylidenfluorid mit Hexafluorpropen oder anderen Comonomeren, kommerziell erhältlich beispielsweise unter den Handelsnamen Kynar^{®} (Arkema, Colombes, Frankreich), Solef^{®} (Solvay Speciality Polymers, Paris, Frankreich), KF Polymer (Kureha Battery Materials Japan Co., Tokyo, Japan). Derartige (Co)Polymere sind löslich in Lösungsmitteln wie z.B. Aceton, NMP, NEP, DMAc, DMF und HMPT und sind somit mischbar mit den bereits zuvor beschriebenen Pigmentdispersionen, die in diesen und weiteren polaren Lösungsmitteln stabil dispergiert werden können.

Insbesondere sind als Bindemittel für die Separatorschicht auch Blockcopolymere mit drei oder mehr Blöcken geeignet, die auch als thermoplastische Elastomere bezeichnet werden. Zur Verwendung mit diesen Polymeren sind insbesondere Aluminiumoxidhydroxide geeignet, die mit mindestens einer siliziumhaltigen organischen Verbindung funktionalisiert sind, welche mindestens einen aliphatischen Rest R mit einer Kettenlänge von vier oder mehr Kohlenstoffatomen enthält.

Im Gegensatz zu statistischen Copolymeren weisen diese Blockcopolymere bevorzugt ein ausgeprägtes Verhalten zur Phasentrennung auf. Damit bilden sie Mikrophasen aus, bei der in der Regel die Phase mit geringerem Anteil in der jeweils anderen dispergiert ist. Auch Lamellenstrukturen sind möglich. Die Strukturen hängen hierbei unter anderem von der Größe und dem Molekulargewicht der Blöcke, den verwendeten Lösungsmitteln und den weiteren in der Beschichtung vorhandenen Komponenten ab, wie bspw. weiteren Polymeren oder Harzen.

Bevorzugt werden Blockcopolymere verwendet, die als mehrphasiges, bspw. zweiphasiges System vorliegen, in dem die endständigen Blöcke eine härtere Phase und die mittelständigen Blöcke eine weichere, d.h. flexiblere Phase bilden. Bevorzugt werden daher Blockcopolymere verwendet, bei denen die endständigen Polymerblöcke eine höhere Glasübergangstemperatur (Tg_{E}) aufweisen als der oder die mittleren Polymerblöcke (Tg_{M}). Tg_{E} beträgt bevorzugt mehr als 70 °C, weiterhin bevorzugt mehr als 75 °C, höchstens 250 °C. Tg_{M} beträgt bevorzugt weniger als 70 °C, weiterhin bevorzugt weniger als 20 °C und besonders bevorzugt weniger als 0 °C, mindestens jedoch -80 °C. Damit ist gewährleistet, dass die Endblöcke durch die Phasentrennung eine Phase mit guter Temperaturstabilität in der Separatorschicht bilden und gleichzeitig die Mittelblöcke zur Flexibilität der Separatorschicht beitragen. Diese Art Phasentrennung ist nur mit Blockcopolymeren mit drei oder mehr Blöcken zu erreichen.

Das Blockcopolymer weist bevorzugt eine Molmasse, bezogen auf das gesamte Polymer mehr als 50.000 g/mol (Gewichtsmittel), besonders bevorzugt von mehr als 100.000 g/mol auf. Das Blockcopolymer weist bevorzugt eine enge Molmassenverteilung (einheitliche Molmasse) auf. Die hohe Molmasse ist gleichbedeutend mit einem möglichst geringen Schmelzflussindex nach ISO 1133 dieser Blockcopolymeren. Bevorzugt sind Blockcopolymere mit einem Schmelzflussindex von weniger als 3 g/10 min bei 230 °C/5 kg, bevorzugt weniger als 1 g/10 min. Durch derartige Triblockcopolymere lässt sich die mechanische Festigkeit der Separatorschicht stark verbessern.

Die chemische Zusammensetzung der Blockcopolymere ist hierbei in weiten Bereichen variabel. So können auch die einzelnen Polymerblöcke wiederum aus Copolymeren bestehen, insbesondere der Mittelblock. Der Gewichtsanteil aller Endblöcke liegt bevorzugt im Bereich von 10 Gew.-% bis 60 Gew.-%, bevorzugt von 20 Gew.-% bis 40 Gew.-%, bezogen auf das Gesamtgewicht des Blockcopolymers. Bei einem geringeren Anteil ist eine effektive Phasentrennung im Allgemeinen nicht zu erwarten, bei einem deutlich höheren Anteil überwiegen die Eigenschaften des Endblockes, so dass die elastomeren Eigenschaften des Mittelblockes oder der Mittelblöcke nicht zum Tragen kommen.

Als Monomere sind in den Blöcken der Blockcopolymere folgende Monomereinheiten bevorzugt: Methyl(meth)acrylat, Ethyl(meth)acrylat, n-Propyl(meth)acrylat, n-Butyl(meth)acrylat, tert.-Butyl(meth)acrylat, n-Hexyl(meth)acrylat, 2-Phenoxyethyl(meth)acrylat, Decyl(meth)acrylat, 2-Ethylhexyl(meth)acrylat, Hexyl-(meth)acrylat, Hexadecyl(meth)acrylat, Isobutyl(meth)acrylat, Isopropyl(meth)acrylat, Octadecyl-(meth)acrylat, Propyl(meth)acrylat, Tetradecyl(meth)acrylat, Vinylbenzoat, Hydroxyethyl(meth)acrylat, Acrylsäure, Methacrylsäure, Crotonsäure, Isocrotonsäure, Maleinsäure, Maleinsäureanhydrid, Styrol, Methyl-styrol, Butylstyrol, Propylstyrol, 4-tert.-Butoxystyrol, 4-tert.-Butylstyrol, 2,5-Dimethylstyrol, 2-Methoxystyrol, Ethylen, Propylen, 1-Buten, Isopren, Butadien, 1-Hexen, Ethylenoxid und Propylenoxid.

Über die Auswahl der Monomere wird die "Unverträglichkeit" der Endblöcke mit dem Mittelblock oder den Mittelblöcken gesteuert, die zur Ausbildung der mehrphasigen Struktur in dem Blockcopolymer führt. Als Mittelblöcke eignen sich insbesondere Polyolefinpolymere oder Polyolefincopolymere. Diese Polymere weisen eine Glastemperatur von unter 70 °C, bevorzugt unter 20 °C und besonders bevorzugt unter 0 °C auf. Als hierzu "unverträgliche" Polymere sind z.B. Polymere aus Monomereinheiten, ausgewählt aus der Gruppe, enthaltend Acrylsäure, Methacrylsäure, Methylmethacrylat, Hydroxyethyl(meth)acrylat, Methylacrylat, alpha-Methylstyrol, Styrol oder4-tert.-Butylstyrol, geeignet.

Umfassen die Mittelblöcke ein Polyacrylat mit niedriger Glasübergangstemperatur, z.B. basierend auf Butylacrylat, eignen sich bspw. Styrol oder Methylmethacrylat als Monomereinheiten für die Endblöcke. Derartige Triblockcopolymere sind bspw. unter dem Handelsnamen Nanostrenght® von Arkema (Colombes, Frankreich) erhältlich. Weitere Beispiele für geeignete Kombinationen sind Blockcopolymere aus Acrylsäure-Ethylen-Acrylsäure, Methylmethacrylat-Ethylenoxid-Methylmethacrylat und auch Triblockcopolymere mit drei unterschiedlichen Blöcken, wie z. B. Methylmethacrylat-Butadien-Styrol.

Insbesondere können die Endblöcke Styrol-Einheiten enthalten. Beispiele für derartige Triblockpolymere sind Styrol-Isopren-Styrol-Triblockcopolymer (SIS), Styrol-Butadien-Styrol-Triblockcopolymer (SBS), Styrol-Ethylen/Propylen-Styrol-Triblockcopolymer (SEPS), Styrol-Ethylen/Buten-Styrol-Triblockcopolymer (SEBS) oder Styrol-Ethylen-Ethylen/Propylen-Styrol-Triblockcopolymer (SEEPS). Die beiden letzteren Polymere können z.B. durch Hydrierung von ungesättigten Copolymeren aus Isopren und Butadien gewonnen werden. Derartige Polymere sind kommerziell erhältlich, bspw. unter den Handelsnamen Kraton® (Kraton Polymers, Houston, TX, USA), Cariflex® (Kraton Polymers) und Septon® (Kuraray Co. Ltd, Tokyo, Japan). Diblockcopolymere, die ebenfalls unter diesen Bezeichnungen zu erhalten sind, zeigen eine geringere mechanische Festigkeit beim Einsatz als Binder für Separatoren als Triblockcopolymere. Es ist daher vorteilhaft, dass ein flexibler Mittelblock an zwei oder, im Falle von sternförmigen Blockcopolymeren, mehrere endständige Blöcke gebunden ist, um besonders gute mechanische Eigenschaften wie eine hohe Reißdehnung und ein hohes E-Modul zu erreichen.

Ein Beispiel für ein geeignetes Pentablockcopolymer wird unter dem Markennamen Nexar® (Kraton Polymers) angeboten. Es besteht aus 5 Blöcken mit dem Aufbau tert.-Butylstyrol-Ethylen/Propylen-sulfoniertes Styrol-Ethylen/Propylen-tert.-Butylstyrol.

Optional kann das Blockpolymer auch vernetzt werden, bspw. vor, während oder nach dem Trocknen der porösen Schicht bei deren Herstellung. Eine Vernetzung des Blockcopolymers kann durch chemische Methoden, z.B. durch den Einbau reaktiver Gruppen in das Blockcopolymer, mit Hilfe eines Vernetzers oder durch strahlenchemische Methoden (UV-Härtung, Elektronenstrahlhärtung), bevorzugt hauptsächlich zwischen den Endblöcken oder hauptsächlich in den Mittelblöcken erfolgen. Hierzu können die End- oder Mittelblöcke der erfindungsgemäßen Blockcopolymere chemisch modifiziert werden oder vernetzbare / reaktive Gruppen durch Copolymerisation in die entsprechenden Blöcken eingebracht werden, wie bspw. Epoxy- oder Hydroxy-Gruppen. Bevorzugt sind Blockcopolymere, die vernetzbare Gruppen in den Endblöcken enthalten. Beispiele hierfür sind Blockcopolymere vom Typ SEEPS und SEBS aus der Septon® V-Serie, die über organische Peroxide oder durch UV-Strahlung oder Elektronenbestrahlung radikalisch vernetzbar sind. Ein weiteres Beispiel sind Triblockcopolymere aus Methylmethacrylat-Butylacrylat-Methylmethacrylat, die in den Polymethylmethacrylat-Endblöcken ein polares Comonomer enthalten (kommerziell erhältlich bspw. als Nanostrength® Functional MAM Blockcopolymere). Diese Comonomereinheiten können dann durch Zugaben von Vernetzungsmitteln wie Anhydriden oder durch thermische kationische Vernetzung verknüpft werden, so dass über die Endblöcke ein dreidimensionales Polymernetzwerk aufgebaut werden kann. In ähnlicher Weise können auch die Mittelblöcke vernetzt werden, z.B. durch UV- oder Elektronenbestrahlung oder thermisch durch Peroxide.

Als organische Bindemittel sind weiterhin Ethylen-Copolymere, z.B. mit Vinylacetat, Acrylsäure, MethacryIsäure oder Acrylestern, wie Butylacrylat oder Methylacrylat, bevorzugt. Der Anteil des Comonomers, welches nicht Ethylen darstellt, beträgt hierbei üblicherweise 10 Gew.% bis 70 Gew.%, bezogen auf das Gesamtgewicht aller Monomeren des Copolymers. Geeignete Polymere sind z.B. Copolymere von Ethylen mit Vinylacetat, die unter den Markennamen Levapren^{®} (Bayer AG, Leverkusen, Deutschland) oder Vinnapas^{®} (Wacker Chemie AG, München, Deutschland). kommerziell erhältlich sind. Besonders geeignet sind dabei hochmolekulare Polymere mit einem gewichtsmittleren Molekulargewicht M_{w} von mehr als 200.000 g/mol.

Weiterhin eignen sich als organische Bindemittel Copolymere von Styrol mit Monomeren wie z.B Acrylnitril, Ethylen, Butadien, Isopren, Buten, Penten, Acrylsäure, Methacrylsäure oder Acrylestern. Eine weitere bevorzugte Substanzklasse bilden Acrylnitril-Butadien-Copolymere, z.B. Nipol^{®} NBR-Polymere der Fa. Zeon (Tokyo, Japan) und Acrylnitril-Butadien-Styrol-Copolymere.

Als organische Bindemittel sind weiterhin Poly(meth)acrylate und deren Copolymere geeignet, wobei die Monomerzusammensetzung in derartigen Copolymeren über einen weiten Bereich variiert werden kann. Bevorzugt sind beispielsweise Copolymere, die hauptsächlich, d.h. zu mindestens 50 Gew.-%, bezogen auf die Zusammensetzung des Copolymers, Acryl-Monomere umfassen, die zu einer vergleichsweise geringen Glasübergangstemperatur von T_{g} unter 70 °C, bevorzugt unter 50 °C im Polymer führen, wie beispielsweise Ethyl(meth)acrylat, Butylacrylat, Propyl(meth)acrylat, Hexylacrylat, Ethylhexylacrylat, Ethyldiglykol(meth)-acrylat oder Polyethylenglykolacrylat. Als Comonomere, welche in einem geringeren Anteil in dem Copoly-mer enthalten sind, können auch Monomere eingesetzt werden, die zu einer höheren Glasübergangstempe-raturen im Polymer führen, z.B. Methylmethacrylat, Methylacrylat, Benzylacrylat, n-Butylmethacrylat, Iso-Butyl(meth)acrylat, tert.-Butyl(meth)acrylat, Styrol, Methylstyrol, Acrylnitril, Acrylsäure oder Methacrylsäure.

Durch eine Variation der monomeren Zusammensetzung in derartigen Copolymeren lässt sich eine optimale Balance zwischen einer guten Löslichkeit in dem organischen Lösungsmittel bzw. Lösungsmittelgemisch der erfindungsgemäßen Beschichtungszusammensetzung und einer geringen Löslichkeit im Elektrolyten einer elektrochemischen Zelle einstellen. Es versteht sich, dass (Co-)Polymere auszuwählen sind, die mit der funktionalisierten Pigmentdispersion verträglich und im Elektrolyten stabil sind. Im Falle der Polyacrylate führen bspw. insbesondere sehr polare Monomere, wie Acrylsäure, Methacrylsäure, Acrylnitril und sehr unpolare Monomere, wie Behenyl(meth)acrylat, iso- oder n-Decyl(meth)acrylat, Dihydrodicyclopentadienyl(meth)acrylat, n-Hexyl(meth)acrylat, Lauryl(meth)acrylat, Dodecyl(meth)acrylat, Octyl(meth)acrylat, 2-Propylheptyl(meth)acrylat, Stearyl(meth)acrylat, 2-Phenoxyethyl(meth)acrylat, Tetradecyl(meth)acrylat, Butylstyrol, Propylstyrol, 4-tert.-Butoxystyrol, 4-tert.-Butylstyrol, 2,5-Dimethylstyrol, 2-Methoxystyrol oder Vinylbenzoat, zu einer geringen Löslichkeit in typischen Elektrolyten auf Basis von Carbonat-Lösungs-mitteln wie Dimethylcarbonat, Methylethylcarbonat, Vinylcarbonat und / oder Ethylcarbonat.

Insbesondere hochmolekulare Polyacrylate mit einem gewichtsmittleren Molekulargewicht M_{w} von mehr als 500.000 g/mol sind als organische Bindemittel im Sinne der vorliegenden Erfindung geeignet.

Zusammenfassend ist das organische Bindemittel bevorzugt ausgewählt aus der Gruppe, enthaltend Polyvinylidenfluorid und dessen Copolymere, Ethylen-Copolymere, bevorzugt Copolymere von Ethylen mit Butylacrylat und / oder Vinylacetat, Triblockcopolymere, bevorzugt solchen mit Styrol-Endblöcken oder (Methacrylat)-Triblockcopolymere, Polyacrylatcopolymere, Styrol-Butadien-Copolymere, Acrylnitril-Butadien-Styrol-Copolymere und Acrylnitril-Butadien-Copolymere. Besonders bevorzugt ist das organische Bindemittel ausgewählt aus der Gruppe, enthaltend Polyvinylidenfluorid und dessen Copolymere, Ethylen-Copolymere, bevorzugt Copolymere von Ethylen mit Butylacrylat und / oder Vinylacetat, Polyacrylatcopolymere, Styrol-Butadien-Copolymere, Acrylnitril-Butadien-Styrol-Copolymere und Acrylnitril-Butadien-Copolymere, die jeweils keine Blockcopolymere mit drei oder mehr Blöcken darstellen.

Weiterhin kann jedes der zuvor beschriebenen Bindemittel eine oder mehrere funktionelle Gruppen aufweisen, welche bevorzugt ausgewählt sind aus der Gruppe, enthaltend olefinische Doppelbindungen, Hydroxylgruppen, Aminogruppen, Epoxidgruppen, Isocyanatgruppen, Acetoacetatgruppen, Carbonsäuregruppen, deren Salze oder Mischungen derselben. Diese ermöglichen, sofern gewünscht, eine Quervernetzung des organischen Bindemittels, ggf. unter Verwendung eines geeignetes Vernetzers und / oder mit Hilfe eines geeigneten Katalysators.

So können beispielsweise als organische Bindemittel copolymere Poly(meth)acrylate eingesetzt werden, die durch Verwendung entsprechender Comonomere geeignete funktionelle Gruppen enthalten, z.B. 4-Hydroxybutyl(meth)acrylat, 2-Hydroxyethyl(meth)acrylat, Hydroxyethylcaprolacton(meth)acrylat, Hydroxypropyl(meth)acrylat, Hydroxypropylcarbamat(meth)acrylat, Hydroxyethyl(meth)acrylat, Glycidylpropan(meth)acrylat, Carboxyethyl(meth)acrylat, Dimethylaminoethyl(meth)acrylat, Acrylsäure, Methacrylsäure, N-Methylolacrylamid oder Diacetonacrylamid.

Wie bereits beschrieben, können derartige funktionellen Gruppen eingesetzt werden, um beispielsweise während oder nach dem Trocknen der Separatorschicht eine Vernetzung der Schicht mittels eines zugesetzten Vernetzungsmittels zu erzielen. Geeignete Vernetzungmittel sind z.B. Di- oder Polyisocyanate, Di- oder Polyepoxy-Verbindungen, Bis- oder Polyaziridine, Di- oder Polyhydrazide, Melamin-Formaldehydharze und Harnstoff-Formaldehydharze. Die entsprechenden Vernetzungsreaktionen sind dem Fachmann grundsätzlich bekannt und können eingesetzt werden, um die Löslichkeit des Bindemittels im Elektrolyten zu reduzieren. Weiterhin können die mechanischen Eigenschaften der Separatorschicht durch die Quervernetzung verbessert werden. Eine thermische Vernetzung mit Vernetzungsmitteln kann während der Trocknung der Schicht oder im Anschluss während der Lagerung erfolgen.

Es können ferner auch organische Bindemittel, Monomere oder Oligomere verwendet werden, die strahlenchemisch, z.B. durch UV- oder Elektronenstrahlung vernetzt werden können. Derartige Polymere können nach der Beschichtung im flüssigen oder getrockneten Zustand quervernetzt werden. Entsprechende Verfahrensweisen sind im Stand der Technik bekannt, z.B. der Einsatz von UV-Initiatoren zur UV-Vernetzung. Zu den strahlenchemisch härtbaren Polymeren gehören z.B. die oben beschriebenen Ethylen-Copolymere, Polymere mit ungesättigten Olefingruppen, z.B. (Meth)acrylgruppen, aber auch PVDF-Homo- oder Copolymere oder spezielle Blockcopolymere. Als Vernetzungskomponente können weiterin bspw. Monomere und Oligomere mit zwei oder mehr funktionellen Gruppen der Beschichtungsdispersion zugegeben werden, insbesondere mit Acryl- oder Methacryl-Gruppen. Beispiele für solche Monomere sind Hexandioldiacrylat, Dipropylenglykoldiacrylat, Tripropylenglykoldiacrylat, Polyethylenglykol-400-diacrylat, Trimethylolpropantriacrylat, Epoxyacrylate und Urethanacrylate, wie sie bspw. von der Fa. Allnex (Drogenbos, Belgien) unter dem Markennamen Ebecryl^{®} angeboten werden. Um eine Vernetzungsreaktion mittels UV-Strahlung durchzuführen, wird ein UV-Initiator zugesetzt. Bei Elektronenstrahlhärtung ist dies nicht erforderlich. Um eine Vernetzung zu erreichen, werden bezogen auf das Bindemittel bevorzugt 1 Gew.-% bis 30 Gew.-%, weiterhin bevorzugt 5 Gew.-% bis 20 Gew.-% der Vernetzungskomponente eingesetzt.

Weiterhin können auch Mischungen der vorstehend beschriebenen Polymere verwendet werden.

Um eine hohe Porosität und eine gleichmäßige Struktur der Separatorschicht zu erzielen, sollten die Aluminiumoxidhydroxid-Pigmente als feinteilige Partikel im Lösungsmittel dispergiert vorliegen und das Bindemittel in diesem Lösungsmittel gelöst sein. Entsprechend der Löslichkeit des ausgewählten Bindemittels und der optimalen Dispergierung der Pigmentteilchen ist es vorteilhaft, durch Verwendung eines dafür geeigneten Lösungsmittels oder-gemisches eine Lösung des Bindemittels herzustellen, eine Vordispergierung des Pigments in einem geeigneten Lösungsmittel oder-gemisches, das von dem ersten Lösungsmittel verschieden sein kann, vorzunehmen und dann eine Mischung dieser Komponenten vorzunehmen, wobei sich das resultierende Lösungsmittelgemisch aus den Zusammensetzungen der Einzelkomponenten und evtl. weiterer Lösungsmittel ergibt. Der Anteil des Feststoffs kann variiert werden, um die Löslichkeit des Bindemittels und/oder die Stabilität der Dispersion zu gewährleisten und/oder die gewünschte Viskosität der Lösung einzustellen. Im Interesse eines kostengünstigen Herstellungsverfahrens für die erfindungsgemäßen Separatoren ist ein möglichst hoher Feststoffgehalt in der Dispersion anzustreben, um möglichst wenig Lösungsmittel nach der Beschichtung verdunsten zu müssen.

Der Feststoffgehalt in der erfindungsgemäßen Beschichtungszusammensetzungen beträgt bevorzugt 1 Gew.-% bis 40 Gew.-%, besonders bevorzugt 5 Gew.-% bis 25 Gew.-%, bezogen auf das Gesamtgewicht der Zusammensetzung.

Die Viskosität der erfindungsgemäßen Beschichtungszusammensetzungen beträgt bevorzugt 10 mPas und 5000 mPas, 100 mPas bis 2.000 mPas bei 20 °C.

Zur Herstellung der erfindungsgemäßen Beschichtungszusammensetzungen wird zunächst eine Pigmentdispersion in einem Lösungsmittel(gemisch) hergestellt, indem das funktionalisierte Pigment unter Rühren in dem Lösungsmittel(gemisch) fein verteilt wird. Hilfreich sind hierbei hohe Scherkräfte, um die aneinander haftenden Pigmentpartikel zu vereinzeln. Hierfür eignen sich, wie dem Fachmann bekannt ist, z.B. Ultraschalldispergatoren, Rührwerkskugelmühlen oder Dispergierscheiben. Zu der dispergierten Pigmentmischung wird dann eine Lösung des Bindemittels gegeben. Bei der Auswahl der Lösungsmittel ist darauf zu achten, dass keine Unverträglichkeiten auftreten, die zu Ausfällungen oder zur Agglomeration der Pigmentpartikel führen können.

Das Gewichtsverhältnis von funktionalisiertem Aluminiumoxidhydroxid zu organischem Bindemittel liegt hierbei, wie bereits beschrieben, im Bereich von 1,5:1 bis 20:1, bevorzugt im Bereich von 1,75:1 bis 20:1, weiterhin bevorzugt von 2:1 bis 20:1, besonders bevorzugt von 2,25 bis 10:1 und insbesondere von 2,5 bis 8:1, sowohl in der Dispersion als auch in der porösen Separatorschicht.

Die Teilchengröße der dispergierten Teilchen liegt bevorzugt im Bereich von 50 nm bis 2000 nm, weiterhin bevorzugt von 50 bis 1000 nm und besonders bevorzugt von 100 nm bis 800 nm, wie ebenfalls bereits beschrieben. Die Messung der Teilchengröße in der Dispersion erfolgt mittels Laserbeugung nach der MIE-Methode mit einem Beckmann Coulter LS-Gerät.

Um die Eigenschaften des Separators bzw. der Separatorschicht zu optimieren, können auch Mischungen der zuvor beschriebenen Bindemittel oder / und Mischungen der zuvor beschriebenen Pigmentpartikel, z.B. mit unterschiedlichen Teilchengrößen oder unterschiedlicher Oberflächenfunktionalisierung, verwendet werden.

Optional können der Beschichtungsdispersion weitere Komponenten zugegeben werden. Insbesondere kann ein Teil eines der oben beschriebenen Blockcopolymere, sofern diese als Bindemittel verwendet werden, ersetzt werden durch Materialien, die verträglich/mischbar sind mit den Endblöcken oder den Mittelblöcken. Hierzu eignen sich Homopolymere, Copolymere oder Harze, die sich bei einer Phasentrennung beim Trocknen in einer der Phasen anreichern, also in der Phase der Endblöcke oder der Mittelblöcke. Beispiele für Materialien, die sich in der Phase der Endblöcke anreichern, sind Polystyrol bei SEBS-Blockcopolymeren oder Polymethylmethycrat bei Methylmethacrylat-Butylacrylat-Methylmethacrylat-Blockcopolymeren. Eine Anreicherung in den Mittelblöcken eines SIS-Copolymers kann bspw. mit einem bei Raumtemperatur (23 °C) flüssigen Polyisoprenharz erzielt werden.

Des Weiteren können Hilfsstoffe in kleinen Mengen (Gesamtmenge aller Hilfsstoffe bis zu 5 Gew.-%, bezogen auf die feste, für 4 Stunden bei 120 °C unter Normaldruck getrocknete Separatorschicht) eingesetzt werden, um den Beschichtungsprozess zu optimieren und / oder die Eigenschaften der Separatorschicht zu verändern. Beispiele hierfür sind Benetzungshilfsmittel, insbesondere nichtionische Tenside, z.B. fluorierte nichtionische Tenside wie sie z.B. unter dem Handelsnamen Capstone^{®}(DuPont de Nemours, Wuppertal, Deutschland) oder Novec^{®} (3M, St. Paul, MN, USA) kommerziell erhältlich sind, Entschäumer, z.B. Silikone, sowie Verdickungsmittel, z.B. Polyurethanverdicker, Polyacrylatverdicker oder Cellulosederivate. Weitere Hilfsmittel sind z.B. Antioxidantien, UV-Initiatoren zur UV-Vernetzung oder UV-Stabilisatoren. Die Auswahl der Hilfsstoffe muss immer im Hinblick auf die Wechselwirkungen in der elektrochemischen Zelle erfolgen und sollte keine negativen Einflüsse auf die Zyklisierung dieser Zellen haben.

Die erfindungsgemäßen Separatoren werden bevorzugt nach dem nachstehend beschriebenen Verfahren hergestellt. Die vorliegende Erfindung betrifft somit ferner ein Verfahren zur Herstellung eines Separators für eine elektrochemische Zelle, bevorzugt eines Separators wie vorstehend beschrieben, umfassend die Herstellung einer porösen Schicht, die mindestens ein organisches Bindemittel und mindestens ein mit mindestens 2,5 Gew.-% mindestens einer siliziumhaltigen organischen Verbindung funktionalisiertes Aluminiumoxidhydroxid umfasst, wobei das Verfahren die folgenden Schritte umfasst:
i. Bereitstellen einer Beschichtungszusammensetzung, umfassend mindestens ein Lösungsmittel, eine Dispersion von mit mindestens 2,5 Gew.-% mindestens einer siliziumhaltigen organischen Verbindung funktionalisierten Aluminiumoxidhydroxidteilchen, bezogen auf das Gewicht von Aluminiumoxidhydroxid, in diesem Lösungsmittel sowie eine Lösung des organischen Bindemittels,
ii. Aufbringen der Beschichtungszusammensetzung auf ein Trägermaterial, um eine Beschichtung auf diesem Trägermaterial zu erhalten und
iii. Trocknen der Beschichtung durch Verdampfen des Lösungsmittels und optionales Quervernetzen des Bindemittels.

Bevorzugt weisen die zur Herstellung der Dispersion verwendeten funktionalisierten Aluminiumoxidhydroxidteilchen eine Kristallitgröße im Bereich von 10 bis 250 nm, besonders bevorzugt 30 bis 150 nm auf und/oder die in der Dispersion enthaltenen funktionalisierten Aluminiumoxidhydroxidteilchen eine mittlere Teilchengröße im Bereich von 50 nm bis 2000 nm, besonders bevorzugt von 50 bis 1000 nm und insbesondere von 100 bis 800 nm auf, wie dies bereits vorstehend beschrieben wurde.

Die mit Bindemittel und ggf. weiteren Komponenten versetzte Pigmentdispersion wird mittels bekannter Auftragsverfahren auf ein Trägermaterial als Beschichtung aufgebracht. Das Auftragsgewicht wird hierbei so gewählt, dass die gewünschte Schichtdicke von 1 µm bis 100 mm im getrockneten Separator erreicht wird, was dem Fachmann bekannt ist. Es ist auch möglich, die gewünschte Gesamtschichtdicke in mehreren Aufträgen aufzubringen. Die bevorzugte Separatorschichtdicke beträgt 3 µm bis 50 µm, bevorzugt 10 µm bis 30 µm bei freitragenden Separatoren und 3 bis 50 µm, insbesondere 3 bis 25 µm bei nicht freitragenden Separatoren, d.h. bei Beschichtung auf ein funktionales Trägermaterial, z.B. einen Polyolefinseparator oder eine Elektrode.

Durch den Überschuss an Pigment im Verhältnis zum organischen Bindemittel in der Beschichtungszusammensetzung entsteht nach dem Verdunsten des Lösungsmittels eine poröse Struktur, wie bereits ausgeführt, deren bevorzugte Eigenschaften wie beispielsweise Gesamtporosität, Porenstruktur, Porendurchmesser bereits vorstehend beschrieben wurden.

Als Auftragsverfahren eignen sich beispielsweise Tauchverfahren, Walzenauftragungsverfahren, z.B. mit Rollrakel, Luftbürste, oder Tiefdruckwalzen oder enddosierte Verfahren wie z.B. Gießrakel, Reverse-Roll-Coating, Düsenbeschichtung oder Vorhanggießen, wie bereits vorstehend beschrieben. Diese Verfahren sind dem Fachmann bekannt. Es sollte bevorzugt eine gleichmäßige Beschichtung ohne Fehlstellen aufgebracht werden, deren Dicke über die Fläche der Beschichtung möglichst konstant sein sollte. Die Abweichungen in der Dicke sollten weniger als 10 %, bevorzugt weniger als 5 %, besonders bevorzugt weniger als 2 % betragen, jeweils bezogen auf den mittleren Wert der Beschichtungsdicke.

Anschließend wird die flüssige Beschichtung auf dem Trägermaterial getrocknet, bevorzugt bei einer Temperatur im Bereich von 50 bis 150 °C, besonders bevorzugt im Bereich von 70 bis 130 °C. Die im Einzelfall zu verwendende Temperatur hängt u.a. von dem in der Beschichtungszusammensetzung verwendeten Bindemittel sowie dem verwendeten Trägermaterial ab, was dem Fachmann bekannt ist. Hierfür eignen sich bspw. Heißluftöfen und Trockner mit Heißluftgebläse. Das Lösungsmittel wird dabei weitgehend verdampft. Dabei bildet sich die feste poröse Separatorschicht auf dem Trägermaterial aus.

Als Trägermaterial sind temporäre und permanente (funktionale) Trägermaterialien geeignet. Als temporäres Trägermaterial für eine freitragende oder vom Träger transferierbare Beschichtung sind alle bahnförmigen Materialien geeignet, von denen die getrocknete Separatorschicht wieder abgelöst werden kann. Der Träger kann bspw. aus Folie oder Papier bestehen und eine oder mehrere Beschichtungen aufweisen. Bevorzugt sind insbesondere Beschichtungen, die ein kontrolliertes Anhaften und Ablösen des Separators erlauben, z.B. sog. Release- oder Antiblocking-Agenzien wie z.B. Polyamide, Amidwachse, Montanwachse, Polyolefinwachse, Esterwachse, Calciumstearat, Zinkstearat, Polyvinylester, Poly(meth)acrylatcopolymere, Fettsäureester, langkettige Alkylpolymere, Polysaccharide, Polysiloxane, Fluorpolymere, z.B. Polytetrafluorethylen und dessen Copolymere, z.B. mit Hexafluorpropen, Ethylen-Tetrafluorethylen-Copolymere, fluorierte Poly(meth)acrylate und Mischungen derselben. Bevorzugt werden silikonisierte Papiere oder Folien als temporäre Trägermaterialien eingesetzt, deren Oberfläche so eingestellt ist, dass eine Mindesthaftung zum getrockneten Separator gegeben ist, dieser aber mit geringer Kraft von dem Träger abgezogen werden kann. Diese Abzugskraft wird nach FTM 3 (Finat Test Methods) gemessen und liegt bevorzugt im Bereich von 0,1 N/50 mm bis 10 N/50 mm.

Geeignete Folien mit und ohne Beschichtung bestehen z.B. aus Polyethylen, Polypropylen, Polyethylenterephthalat (PET), Polyethylennaphthalat, Polytetrafluorethylen, Polyethylen-co-tetrafluorethylen, Polyimid oder Polyamid. Insbesondere eignen sich silikonisierte biaxial verstreckte PET-Folien. Als Trägerpapiere kommen insbesondere Papiere mit Beschichtungen in Frage, die für die Herstellung von Gießfolien angeboten werden, z.B. von der Fa. Sappi vom Typ Ultracast (Sappi Fine Paper Europe S. A., Brüssel, Belgien).

Das Abziehen der getrockneten Beschichtung von dem temporären Träger kann bspw. von Hand geschehen, solange die abzuziehende Fläche nicht groß ist, aber auch maschinell, z.B. auf einem Rollenumwickler. Dabei kann der temporäre Träger zurückgewonnen und erneut zur Beschichtung eingesetzt werden, ggf. auch mehrfach. Dies ist besonders aus Kostengründen bevorzugt. Alternativ kann der beschichtete Träger, z.B. nach Zuschnitt auf die gewünschte Breite, in der Batterieherstellung so eingesetzt werden, dass die Beschichtung erst bei der Batterieherstellung auf eine Elektrode oder zwischen die Elektroden übertragen wird. Dabei ist es vorteilhaft, dass zunächst die Separatorschicht an der Kathode oder Anode anhaftet, bevor der temporäre Träger abgezogen wird.

Als permanente (funktionale) Trägermaterialien kommen insbesondere flächenförmige, poröse Materialien oder die aktiven Komponenten, also die Kathoden- oder Anodenmaterialien einer elektrochemischen Zelle in Frage. Als Separatorschicht ist die erfindungsgemäße Beschichtung stets zwischen Anode und Kathode anzuordnen. Dabei kann die Beschichtung auf die Kathode bzw. das Kathodenmaterial und / oder die Anode bzw. das Anodenmaterial direkt aufgebracht werden. Nach dem Trocknen dient diese Beschichtung dann als Separatorschicht, welche mit oder ohne zusätzliche Separatorschicht(en) in der Batterie verwendet werden kann. Als weitere Separatorschichten können z.B. Gewebe, synthetisches Papier (d.h. Papier, welches vollständig aus Kunststoff- statt Cellulosefasern besteht), Kunststoffvliese, z.B. Spinnvliese und Elektrospinnvliese oder herkömmliche poröse Polyolefinseparatoren zusätzlich zu der auf der Elektrode aufgebrachten Separatorbeschichtung eingesetzt werden. Alternativ kann die Beschichtung zunächst auf einen funktionalen Träger aufgebracht werden, der dann mit der Beschichtung als mehrlagiger Separator in einer elektrochemischen Zelle verwendet wird. Hierzu kann die Beschichtung einseitig oder beidseitig auf z.B. Gewebe, synthetisches Papier, Kunststoffvliese, z.B. Spinnvliese und Elektrospinnvliese oder herkömmliche poröse Polyolefinseparatoren aufgebracht werden, um dann einen mehrlagigen zusammengesetzten Separator zu bilden. Wichtig ist, dass die erfindungsgemäße Beschichtung gleichmäßig und vollflächig aufgebracht wird, da sie als eigenständige Separatorschicht wirkt und aufgrund ihres überwiegend anorganischen Anteils nicht schmilzt und so die Sicherheit der elektrochemischen Zelle, insbesondere von Lithiumionen-Batterien, erhöht. Die Beschichtungsbestandteile können als separate Schicht eines Mehrschichtseparators auf der äußeren Oberfläche des Trägermaterials aufliegen und / oder in die Poren des Trägermaterials eindringen und diese füllen.

Werden thermoplastische Kunststoffe als funktionales Trägermaterial verwendet, kann dieses Material die Funktion der Batterieabschaltung bei Überhitzung übernehmen (sog. Shut-Down). Insbesondere poröse Polyolefinfolien können im Rahmen der vorliegenden Erfindung in den erfindungsgemäßen mehrlagigen Separatoren aufgrund ihrer Schmelzeigenschaften dazu genutzt werden, die Leitfähigkeit für Lithiumionen in einer Lithiumionenbatterie soweit zu reduzieren, dass eine unkontrollierte Entladung bei erhöhter Temperatur, beispielsweise oberhalb von 100 °C, zwischen Anode und Kathode, z.B. bei übermäßiger Erhitzung durch starke Stromentnahme aus der Batterie, behindert wird. Hierfür ist es erforderlich, dass die Leitfähigkeit des Elektrolyten in der Separatorschicht mindestens um den Faktor 100 reduziert wird. Die Porosität nimmt dabei stark ab, so dass die Luftdurchlässigkeit, gemessen nach Gurley, auf mindestens 10.000 s pro 100 ml ansteigt. Dieser Shut-Down-Effekt kann über den Schmelzpunkt und das Schmelzverhalten der verwendeten Polymere gesteuert werden. Bei Polyethylen sind z.B. Shut-Down-Temperaturen von 80 °C bis 130 °C möglich, bei Polypropylen von 120 °C bis 150 °C. Durch geeignete Auswahl der Polymeren und Copolymeren bzw. durch Mischung derselben kann dieser Bereich variiert werden. Geeignete Polyolefinseparatoren können in den sogenannten "wet"- oder "dry"-Verfahren hergestellt werden und ein- oder mehrlagig aufgebaut sein. Insbesondere bestehen diese Separatoren aus Polyethylen (PE) oder Polypropylen (PP) oder aus kombinierten Lagen dieser Polymere, z.B. PP/PE/PE. Sie haben üblicherweise eine Dicke von 12 µm bis 35 µm. Kommerziell erhältlich sind solche Separatoren z.B. von den Firmen Celgard (Charlotte, NC, USA), Ube America Inc., (New York, NY, USA), Asahi Kasei E-materials Corp, (Tokyo, Japan) und anderen. Die Kombination aus PP/PE/PP-Lagen wird im Stand der Technik als Shut-Down-Separator angewendet, da PE bei niedrigeren Temperaturen als PP schmilzt. Wird die Schmelztemperatur von PP erreicht, unterliegen solche Separatoren ohne die erfindungsgemäße Schicht, die das funktionalisierte Pigment enthält, einer starken Schrumpfung und können die Elektroden nicht sicher trennen. In Kombination mit der erfindungsgemäßen Separatorschicht wird diese Aufgabe hingegen selbst bei einem shut-down von dieser Schicht übernommen.

Die erfindungsgemäßen Separatoren können bevorzugt auch als freitragenden Separatoren vorliegen. Diese freitragenden Separatoren weisen eine genügend hohe mechanische Festigkeit auf, die gewährleistet, dass die poröse Schicht weder während der Herstellung der Batterie noch in deren Anwendung reißt. Aufgrund der isotropen Struktur der Separatoren sind die mechanischen Eigenschaften in Beschichtungsrichtung und in Querrichtung weitgehend gleich. Die Reißdehnung beträgt bevorzugt mindestens 2 %, weiterhin bevorzugt mindestens 5 % und besonders bevorzugt mindestens 10%. Bei einem freitragenden Separator mit einer Schichtdicke von 20 µm beträgt die Bruchlast bevorzugt 0,5 MPa bis 50 MPa, weiterhin bevorzugt 1 MPa bis 10 MPa. Der E-Modul beträgt bevorzugt mindestens 30 MPa, weiterhin bevorzugt mehr als 100 MPa und besonders bevorzugt über 500 MPa. Die obere Grenze des E-Moduls beschränkt die vorliegende Erfindung nicht; der E-Modul liegt üblicherweise unterhalb von 5.000 MPa. Die vorgenannten mechanischen Eigenschaften werden nach ASTM 882 bestimmt.

Bei mehrlagigen Separatoren mit einem permanenten Trägermaterial werden die mechanischen Eigenschaften maßgeblich auch durch dieses Trägermaterial bestimmt, da die Beschichtungsdicke der erfindungsgemäßen porösen Beschichtungen bevorzugt wesentlich geringer ist als bei den freitragenden Separatoren. Wird z.B. ein poröser PP-Separator von 16 µm Dicke mit der erfindungsgemäßen Beschichtungszusammensetzung beschichtet, ist beidseitig eine Beschichtungsdicke von 3 µm bis 8 µm ausreichend, um die beschriebenen positiven Effekte zu erzielen. Die Dicken der einzelnen Schichten können jedoch in einem weiten Bereich variiert werden, um die Eigenschaften des zusammengesetzten Separators für eine bestimmte Anwendung in elektrochemischen Zellen zu optimieren. Grundsätzlich ist eine geringe Gesamtdicke vorteilhaft, um einen hohen lonenfluss in der elektrochemischen Zelle zu gewährleisten und eine hohe Kapazität zu erreichen.

Überraschenderweise wurde auch gefunden, dass die erfindungsgemäßen Separatoren bzw. Separatorschichten spontan in Kontakt mit Flüssigkeiten mit Oberflächenspannungen unterhalb von 60 mN/m benetzen, wie sie polare und unpolare organische Lösungsmittel sowie üblicherweise in Lithium-Ionen-Batterien verwendete Elektrolyten, beispielsweise eine Mischung aus 1:1 (w/w) Ethylencarbonat und Dimethylcarbonat mit 1 mol/l Lithiumhexafluorophosphat aufweisen. Beim Aufbringen eines Flüssigkeits-tropfens auf die Separatorschicht benetzt dieser sofort und fängt an zu spreiten. Im Falle einer freitragenden Schicht schlägt das Lösungsmittel unmittelbar zur Rückseite der Schicht durch. Dabei durchdringt die Flüssigkeit die poröse Struktur vollständig. Dieser Effekt wird auch für die beschichteten funktionalen Trägermaterialien beobachtet, wenn die mit der Beschichtung versehene Seite benetzt wird. Dabei ist es besonders überraschend, dass auch mit den erfindungsgemäßen Beschichtungen modifizierte PO-Separatoren schnell und vollständig benetzt werden, obwohl diese ohne Beschichtung nur langsam und z.T. unvollständig mit Elektrolyten benetzbar sind.

Separatoren sollten auch bei erhöhter Temperatur, z.B. im Falle einer Überhitzung der elektrochemischen Zelle, den direkten Kontakt zwischen Kathode und Anode verhindern. Deshalb ist die starke Schrumpfung von herkömmlichen Separatoren aus schmelzbaren Kunststoffen wie Polyethylen oder Polypropylen ein ernsthaftes Sicherheitsproblem. Während herkömmliche Separatoren auf Polyethylen-Basis innerhalb einer Stunde schon bei 90 °C um mehrere Prozent schrumpfen, je nach Herstellungsverfahren unterschiedlich stark in Längs- und/oder Querrichtung, bezogen auf den Bahnlauf im Herstellungsverfahren, zeigen die erfindungsgemäßen freitragenden Separatoren selbst bei 150 °C nur eine sehr geringere Schrumpfung in Längs- wie in Querrichtung, bevorzugt von weniger als 2,0%, besonders bevorzugt weniger als 1,0%. Bei dieser Temperatur verlieren Separatoren aus PP oder PE ihre mechanische Festigkeit vollständig.

Alternativ kann der erfindungsgemäße Separator auch auf ein Trägermaterial aufgebracht sein, welches bevorzugt ausgewählt ist aus der Gruppe, enthaltend Anoden, Anodenmaterial, Kathoden, Kathodenmaterial, poröse Trägermaterialien wie mikroporöse Kunststoffseparatoren, Vliese, synthetisches Papier, Gewebe oder Mischungen derselben. Im Falle der Beschichtung einer Elektrode bzw. eines Elektrodenmaterials wird die erfindungsgemäße Beschichtungszusammensetzung aus funktionalisiertem Pigment, Bindemittel, Lösungsmittel und ggf. weiteren Hilfsstoffen auf ein aktives Elektrodenmaterial beschichtet und danach getrocknet. Durch die direkte Beschichtung einer oder beider Elektrodenmaterialien kann auf einen freitragenden, bei der Produktion von elektrochemischen Zellen zwischen Anode und Kathode positionierten Separator verzichtet werden. Es ist aber auch möglich, zusätzlich zur direkten Elektrodenbeschichtung mit der erfindungsgemäßen Separatorschicht weitere Separatorkomponenten einzusetzen, z.B. Vliese oder mikroporöse Polymerseparatoren.

Sofern die poröse Schicht auf ein funktionales Trägermaterial wie ein Vlies oder einen Polyolefinseparator aufgebracht ist, weist auch dieser mehrlagige Separator eine geringere Schrumpfung als das Trägermaterial selbst auf. Dies ist abhängig von den Schrumpfungseigenschaften des Trägermaterials wie auch von den Dickenverhältnissen von Trägermaterial und Beschichtung(en). Je höher der Anteil an poröser, hauptsächlich anorganischer Beschichtung ist, desto stabiler ist der mehrlagige Separator bei höheren Temperaturen. Die Schrumpfeigenschaften der mehrlagigen Separatoren können weiterhin durch die Einwirkung von Lösungsmitteln und die Trocknung der erfindungsgemäßen Separatorschicht optimiert werden, insbesondere unter Bedingungen mit geringer Bahnspannung bei der Beschichtung. Dabei relaxiert das Trägermaterial, was zu geringerer Schrumpfung bei Temperatureinwirkung führt. Bspw. weist ein erfindungsgemäßer mehrlagiger Separator, umfassend die poröse Beschichtung und ein (ebenfalls poröses) Polypropylenträgermaterial, unter den oben angegebenen Bedingungen bevorzugt eine Schrumpfung von weniger als 5%, insbesondere weniger als 3% in Längs-und Querrichtung bei 150 °C und 60 min Verweilzeit auf.

Wie bereits ausgeführt, sind der erfindungsgemäße poröse Separator bzw. die poröse Separatorschicht stabil in typischen Elektrolyten für Lithium-Ionen-Batterien, insbesondere gegenüber ionischen Elektrolytflüssigkeiten und organischen Carbonat-Lösungsmitteln, wie bspw. Dimethylcarbonat, Ethylmethylcarbonat, Vinylcarbonat, Diethylcarbonat etc., sowie den darin verwendeten Lithiumsalze, wie bspw. LiPF₆, LiBF₄, LiSbF₆, LiAsF₆, LiClO₄, LiCF₃SO₃, Li(CF₃SO₂)₂N, LiC₄F₉SO₃, LiAlO₄, LiAlCl₄, LiCl und Lithiumbisoxalatoborat (LiBOB). Insbesondere ist bei Kontakt mit dem Elektrolyten keine Verformung, Auflösung oder Verfärbung der porösen Schicht zu beobachten. Weiterhin können Gelelektrolyten mit den o.g. Salzen oder ionische Flüssigkeiten als Elektrolyt verwendet werden.

Aufgrund der hohen Porosität und der durchgängigen Porenstruktur weisen die mit Elektrolyt gefüllten Separatoren einen niedrigen Widerstand gegenüber Lithiumionen auf, was durch eine McMullin-Zahl von bevorzugt kleiner als 12 ausgedrückt wird. Diese Zahl wird aus dem Verhältnis der spezifischen Leitfähigkeiten von Elektrolyt und von mit Elektrolyt gefülltem Separator errechnet, wie von S. S. Zhang in Journal of Power Sources 2007, 164, 351-364 beschrieben. Bei einer McMullin-Zahl von kleiner als 12 wird in Lithium-Ionen-Zellen der Transport von Lithiumionen durch den Separator auch bei höheren Stromdichten (bis 10 C) gewährleistet.

Der erfindungsgemäße Separator eignet sich daher auch insbesondere zur Verwendung in einer Lithium-Ionen-Batterie. Die vorliegende Erfindung betrifft daher ferner eine Lithium-Ionen-Batterie, umfassend mindestens eine Anode, mindestens eine Kathode und mindestens eine erfindungsgemäße Separatorschicht, sowie vorteilhafterweise mindestens einen Elektrolyten.

Lithium-Ionen-Batterien umfassen im Sinne der vorliegenden Erfindung alle elektrochemischen Zellen, in denen Lithium reversibel zwischen Anodenmaterial und Kathodenmaterial transportiert werden kann, insbesondere wiederaufladbare Batterien. Sie können als Kathodenmaterial z.B. LiCoO₂, LiFePO₄, LiMnO₂ oder LiNi_{0,33}Co_{0,33}Mn_{0,33}O₂ (NMC) und als Anodenmaterial z.B. metallisches Lithium, Lithiumtitanat oder Lithium/Graphit-Einlagerungsverbindungen enthalten, die in der Regel auf einen metallischen Stromableiter, z.B. eine Kupfer- oder Aluminiumfolie, aufgebracht sind. Zur Trennung von Kathode und Anode ist mindestens ein erfindungsgemäßer Separator zwischen Kathode und Anode vollflächig eingebracht, um den direkten Kontakt zwischen den Elektroden zu verhindern. Um den Transport der Lithiumionen in der Batterie zu gewährleisten, werden die Hohlräume (Poren) der Anode, Kathode und der Separatorschicht(en) mit einem Elektrolyten gefüllt und somit elektrochemisch verbunden. Die Elektrolyten enthalten in der Regel organische Lösungsmittel, in denen Lithiumsalze gelöst sind oder bestehen aus ionischen Flüssigkeiten.

Die Anwendung der erfindungsgemäßen Separatoren in Lithium-Ionen-Batterien erfordert eine ausreichende Trocknung. Einerseits müssen die für die Beschichtung verwendeten Lösungsmittel möglichst vollständig entfernt werden, andererseits ist es erforderlich, die in die Batterie eingetragene Wassermenge möglichst gering zu halten. Wasser kann zur Zersetzung des Elektrolyten oder auch der Anode oder Kathode führen. Dadurch wird die Kapazität der Batterie reduziert oder die Batterie sogar unbrauchbar.

Da die erfindungsgemäßen Separatorschichten temperaturstabil sind, können sie, um adsorbiertes Wasser zu entfernen, kurzzeitig auf 80 °C bis 200 °C, bevorzugt auf 100 °C bis 150 °C erhitzt werden, insbesondere bevorzugt bei sehr niedriger absoluter Luftfeuchtigkeit von 1 ppm bis 50 ppm (bestimmt bei Raumtemperatur). Dies kann beispielsweise mittels Heißlufttrocknung, Mikrowellenheizung oder Kontaktheizung geschehen, bevor der Separator bei der Herstellung der Batterie zwischen Anode und Kathode eingebracht wird oder kurz vor dem Zusammenfügen der Batteriekomponenten im Falle der Beschichtung der Anode oder Kathode mit dem Separator. In der Regel ist es aber ausreichend, die Separatoren in einem Trockenraum, z.B. bei einer absoluten Luftfeuchtigkeit von 10 ppm Wasser für einen Zeitraum von bis zu 24 Stunden zu lagern. Hierbei nimmt der Wassergehalt des Separators stark ab und nähert sich dem Gleichgewicht in dieser Umgebung an. Alternativ kann eine Trocknung des Separators bzw. der Separatorschicht unter vermindertem Druck bei den bereits genannten Temperaturen erfolgen. Die Trocknung kann vor der Kontaktierung mit den Elektrodenmaterialien geschehen oder erst danach, jedoch stets vor der Zugabe des Elektrolyten.

Die vorliegende Erfindung betrifft weiterhin auch eine Beschichtungszusammensetzung zur Herstellung des erfindungsgemäßen Separators, bevorzugt nach dem erfindungsgemäßen Verfahren, die eine Lösung mindestens eines organischen Bindemittel enthält, bevorzugt eines organischen Bindemittels wie bereits vorstehend beschrieben und eine Dispersion mindestens eines Aluminiumoxidhydroxids, welches an seiner Oberfläche mit mindestens 2,5 Gew.-% mindestens einer siliziumhaltigen organischen Verbindung funktionalisiert ist, bezogen auf das Gewicht von Aluminiumoxidhydroxid, bevorzugt eines bereits vorstehend beschriebenen Aluminiumoxidhydroxids in mindestens einem Lösungsmittel, wobei das Gewichtsverhältnis von funktionalisiertem Aluminiumoxidhydroxid zu organischem Bindemittel im Bereich von 1,5:1 bis 20:1 liegt.

Die im Zusammenhang mit der Erfindung angegebenen Eigenschaften werden nach den folgenden Methoden bestimmt:
**Beschichtungsdicke und Gesamtdicke:** Die Gesamtdicke eines Separators wird nach ISO 534 bestimmt. Bei mehrlagigen Separatoren kann aus der Differenz der Ausgangsdicke des Trägermaterials und der Gesamtdicke des mehrlagigen Separators die Beschichtungsdicke bestimmt werden. Wenn die Beschichtung teilweise in das Trägermaterial eingedrungen ist, wird die Gewichtszunahme in Folge des Beschichtungsverfahrens bestimmt. Alternativ können auch mikroskopische Aufnahmen an Querschnitten zur Bestimmung der Dicke herangezogen werden.
**Benetzung:** Die Benetzung wird nach dem Verfahren bestimmt, welches im NASA Report NASA/TM-2010-216099 "Battery Separator Characterization and Evaluation Procedures for NASA's Advanced Lithium-Ion Batteries; May 2010" beschrieben ist. Beobachtet wird die Benetzung und Penetration eines auf eine Separatoroberfläche aufgebrachten Tropfens der Elektrolyt-Flüssigkeit (1 M LiPF₆ in 1:1 Ethylencarbonat / Diethylcarbonat (w/w)). Optimal ist eine spontane Benetzung.
**Mechanische Festigkeit:** Gemessen werden Bruchlast, Reißdehnung und E-Modul nach ASTM 882.
**Luftdurchlässigkeit nach Gurley:** Die Luftdurchlässigkeit des Separators wird nach Gurley entsprechend ASTM D726-94 bestimmt, wie in S. S. Zhang Journal of Power Sources 2007, 164, 351-364 beschrieben. Der Gurley-Wert ist ein Maß für Tortuosität und den Durchmesser der Poren.
**Porosität:** Die Porosität (Hohlraumvolumen), die Porengrößenverteilung und der mittlere Porendurchmesser werden nach DIN 66133 mittels Quecksilber-Porosimetrie an freitragenden Separatorbeschichtungen oder ggf. an den auf das Trägermaterial aufgebrachten Separatorschichten bestimmt.
**Thermische Schrumpfung:** Das Schrumpfen unter Temperaturbelastung wird durch Längenmessung vor und nach Lagerung im Vakuumtrockenschrank für 60 min bei 150 °C und für 5 min bei 200 °C bestimmt, wie in S. S. Zhang Journal of Power Sources 2007, 164, 351-364 beschrieben, wobei in Beschichtungsrichtung und quer zur Beschichtungsrichtung gemessen wird.
**Bestimmung der Kristallitgröße:** Die Kristallitgröße und Struktur (plättchenförmig, nadelförmig, blockartig) kann in elektronenmikroskopischer Analyse in Transmission (TEM) oder Reflektion (REM) an getrocknetem Pigment oder an einer Separatorschicht ermittelt werden. Vorliegend wurde die Kristallitgröße, sofern nicht anders angegeben, über die Verbreiterung von Reflexen, insbesondere der 120-Kristallebene, in der Röntgenbeugung (X-ray diffraction) an dem Pigment oder an einer Separatorschicht bestimmt.
**Bestimmung des Funktionalisierungsgrades:** Der Funktionalisierungsgrad des Aluminiumoxidhydroxid-Pigmentes wird vorliegend aus der Menge des eingesetzten, bei 120 °C bei p = 1.10⁻³ mbar für 4 Stunden getrockneten Aluminiumoxidhydroxids und des durch die Funktionalisierungsreaktion und evtl. Reinigungsschritte erhaltenen, unter gleichen Bedingungen getrockneten, funktionalisierten Pigmentes ermittelt. Der Funktionalisierungsgrad ist die relativen Gewichtszunahme des Aluminiumoxidhydroxids durch die Funktionalisierung mit der mindestens einen siliziumhaltigen organischen Verbindung, bezogen auf das eingesetzte (unfunktionalisierte) Aluminiumoxidhydroxid.
   Durch die Vortrocknung wird auf der Oberfläche des Pigmentes physisorbiertes Wasser entfernt. Aufgrund der Substitution der Abgangsgruppe bei der Funktionalisierung wird nur ein Teil siliziumhaltigen Eduktes an die Oberfläche des AIOOH-Pigmentes gebunden und beispielsweise Alkohol bzw. Chlorwasserstoff werden abgespalten.
**Shut-Down-Eigenschaft:** Mehrlagige Separatoren mit schmelzbaren Schichten werden für 15 Minuten in einem Trockenschrank auf eine vorgegebene Temperatur erhitzt. Um den Shut-Down-Effekt zu ermitteln, werden verschiedene Temperaturen zwischen 80 °C und 150 °C gewählt, um die minimal erforderliche Temperatur für den Shut-Down-Effekt zu ermitteln. Als Maß für die Veränderung der Porenstruktur dient die Abnahme der Porosität (Zunahme des Gurley-Wertes). Für einen effektiven Shut-Down sollte die Gurley-Luftdurchlässigkeit auf mindestens 10.000 s pro 100 ml ansteigen.
**Elektrochemischer Test:** Eine elektrochemische Zelle (Coin-Zelle) mit einer Fläche von etwa 2 cm² wird aus einer Kathode, bestehend aus Aluminiumfolie, einseitig beschichtet mit aktivem Kathodenmaterial aus LiCoO₂(Li-Ion Battery Cathode Aluminum foil single side coated by LiCoO₂, 0.1 mm thickness, item number: bc-af-241co-ss) der Firma MTI (Richmond, CA, USA) und einem Anodenmaterial aus Graphit (Li-Ion Battery Anode - Copper foil single side coated by CMS Graphite, 0.1 mm thickness, item number: bc-cf-241-ss), beschichtet auf eine Kupferfolie, ebenfalls von der Fa. MTI und dem zu testenden Separator aufgebaut. Der Separator wird bei 100 °C für 24 Stunden bei einem Druck von etwa 1.10⁻³ mbar getrocknet und beim Aufbau der Zelle bei einer Luftfeuchtigkeit von 20 ppm zwischen aktivem Kathodenmaterial und Anodenmaterial angeordnet, so dass der Separator die Kathode und Anode überragt. Nach Zugabe einer Menge an Elektrolyt (1 M LiPF₆ in 1:1 Ethylencarbonat / Diethylcarbonat (w/w)), die ausreichend ist, um die Kathode, den Separator und die Anode vollständig zu benetzen und die Poren zu füllen, an die Seite dieser Anordnung lässt man den Elektrolyten für mindestens eine Stunde einwirken. Ggf. wird überschüssige Flüssigkeit entfernt. Diese Anordnung wird mit äußeren Ableitungen versehen, die elektrisch mit einem Stromzyklisierungsgerät der Fa. Maccor (Tulsa, OK, USA) verbunden sind. Die Ausgangsladekapazität dieser Zelle liegt bei ca. 130 mAh/g. Mit einem Lade- und Entladestrom von 0,2 C wird die elektrochemische Zelle bei Raumtemperatur zunächst dreimal zyklisiert, um die Batterie zu formieren. Um die Eignung des eingesetzten Separators zu beurteilen, wird die Restladekapazität in % dann nach 100 Zyklen bei 0,2 C bestimmt. Dieser Wert ist ein Maß für die Stabilität der elektrochemischen Zelle. Herkömmliche poröse Polyolefinseparatoren erreichen in diesem Test mindestens 80 % Restladekapazität.

### Beispiel 1

150 g synthetisches Böhmit-Pigment mit einer Kristallit-Größe von 100 nm wurde 4 Stunden bei 120 °C unter Normaldruck getrocknet. Das so vorgetrocknete Pigment wurde in 800 ml wasserfreiem p-Xylol unter Verwendung eines Ultraschallhomogenisators (BANDELIN Typ UW 3200, Berlin, Deutschland) aufgeschlämmt bzw. vordispergiert. Diese Mischung wird zum Rückfluss erhitzt. Unter Rühren wurden 56,4 g Phenylmethyldimethoxysilan und 36,3 g Dimethyldimethoxysilan in 50 ml wasserfreiem p-Xylol am Rückfluss hinzugetropft. Anschließend wurde die Reaktionsmischung für 5 Minuten mit dem Ultraschallhomogenisator beschallt und dann 20 Stunden zum Rückfluss erhitzt. Während dieser Zeit wurde die Reaktionslösung jede Stunde für jeweils 5 Minuten beschallt. Nach 20 Stunden wurden 120 ml Ethanol unter Rühren hinzugefügt, und die Reaktionslösung wurde im Rotationsverdampfer bei einem Druck von ca. 20 mbar eingeengt, so dass ein trockenes Pulver erhalten wurde. Dieses wurde in 125 ml wasserfreiem Toluol aufgeschlämmt und nochmals im Rotationsverdampfer bis zur Trockne eingeengt. Anschließend wurde das Pulver bei 150 °C bei einem Druck von ca. 30-40 mbar für ca. 2 Stunden wärmebehandelt, so dass restliches Lösungsmittel und nicht umgesetzte Edukte entfernt wurden und ein rieselfähiges Pulver erhalten wurde. Der gravimetrisch ermittelte Funktionalisierungsgrad desselben betrug 4,7%.

Dieses funktionalisierte Aluminiumoxidhydroxid-Pigment wurde in einer Mischung aus N-Ethylpyrrolidon und Methylethylketon im Gewichtsverhältnis 1,8:1 aufgeschlämmt und mittels Ultraschallhomogenisator vordispergiert (Feststoffgehalt 36%). Anschließend wurde die Mischung in einer Perlmühle dispergiert, so dass eine stabile Dispersion mit einer mittleren Teilchengröße von ca. 650 nm (d50 Wert) erhalten wurde.

Diese Pigmentdispersion wurde anschließend unter Rühren mit einer Bindemittellösung eines PVDF-Homopolymeren (Bezeichnung: KF Polymer W#7300 der Firma Kureha, Japan) in einer Mischung aus N-Ethylpyrrolidon und Methylethylketon im Verhältnis 1,8:1 und einem Feststoffgehalt von 5,9 % versetzt, so dass eine Streichmasse mit einem Feststoffgehalt von ca. 17,7% bei einem Pigment-Bindemittel-Verhältnis von 4:1 (80% silanfunktionalisiertes Pigment) entsteht.

Die Streichmasse wurde mit Hilfe eines Laborstreichtisches (Erichsen Coatmaster, Erichsen GmbH & Co. KG, Hermer, Deutschland) so auf einen temporären Träger (Ultracast Adva Patina der Firma Sappi Europe) appliziert, dass nach vollständiger Entfernung des Lösungsmittels (Anteil >1 Gew.-%, ermittelt mittels Headspace-GC) in einem Trockenschrank bei 110 °C eine Beschichtung mit einer Dicke von ca. 20 µm erhalten wurde.

Diese Beschichtung ließ sich leicht von Hand von dem Trägerpapier abziehen. Die Abzugskraft nach FTM3 betrug 5,0 N/50 mm. Der dann freitragende Separator wurde physikalisch und elektrochemisch charakterisiert (Tabelle 1).

Eine Schrumpfung konnte bei 150 °C über einen Zeitraum von 60 min weder in Längs- noch in Querrichtung beobachtet werden. Innerhalb der Messgenauigkeit liegt die Schrumpfung somit unter 0,1%. Es war keine sichtbare Veränderung, z.B. Verfärbung, des Separators zu beobachten.

In einer Lithiumionenzelle mit LiCoO₂ als Kathode und Graphit-Andode mit dem porösen Separator zwischen den Elektroden wurde in dem oben beschriebenen Batterietest nach 100 Zyklen eine Abnahme der Ladekapazität um lediglich 6% auf 94% der ursprünglichen Kapazität beobachtet.

### Beispiel 2

150 g synthetisches Böhmit-Pigment mit einer Kristallit-Größe von 100 nm wurde 24 Stunden bei 120 °C unter Normaldruck getrocknet. Das so vorgetrocknete Pigment wurde in 800 ml wasserfreiem p-Xylol unter Verwendung eines Ultraschallhomogenisators (BANDELIN Typ UW 3200, Berlin, Deutschland) aufgeschlämmt bzw. vordispergiert. Diese Mischung wurde zum Rückfluss erhitzt. Unter Rühren wurden 33 g Phenylmethyldimethoxysilan, 54 g Octylmethyldimethoxysilan und 36 g Dimethyldimethoxysilan in 50 ml wasserfreiem p-Xylol am Rückfluss hinzugetropft. Anschließend wurde die Reaktionsmischung für 5 Minuten mit dem Ultraschallhomogenisator beschallt und dann 20 Stunden zum Rückfluss erhitzt. Während dieser Zeit wurde die Reaktionslösung jede Stunde für jeweils 5 Minuten beschallt. Nach 20 Stunden wurden 120 ml Ethanol unter Rühren hinzugefügt, und die Reaktionslösung wurde im Rotationsverdampfer bei einem Druck von ca. 20 mbar eingeengt, so dass ein trockenes Pulver erhalten wurde. Dieses wurde in 125 ml wasserfreiem Toluol aufgeschlämmt und nochmals im Rotationsverdampfer bis zur Trockne eingeengt. Anschließend wurde das Pulver bei 150 °C bei einem Druck von ca. 30-40 mbar für ca. 2 Stunden wärmebehandelt, so dass restliches Lösemittel und nicht umgesetzte Edukte entfernt wurden und ein rieselfähiges Pulver erhalten wurde. Der gravimetrisch ermittelte Funktionalisierungsgrad betrug 5,2%.

Dieses funktionalisierte Aluminiumoxidhydroxid-Pigment wurde in Toluol aufgeschlämmt und mittels Ultraschallhomogenisator vordispergiert (Feststoffgehalt 32%). Anschließend wurde die Mischung in einer Perlmühle dispergiert, so dass eine stabile Dispersion mit einer mittleren Teilchengröße von ca. 680 nm (d50 Wert) erhalten wurde.

Diese Pigmentdispersion wurde anschließend unter Rühren mit einer Bindemittellösung eines SEBS-Triblockcopolymeren (Bezeichnung: Kraton G1654 EU der Firma Kraton Polymers, Houston, TX, USA) in Toluol mit einem Feststoffgehalt von 5,5% versetzt, so dass eine Streichmasse mit einem Feststoffgehalt von ca. 16,3% bei einem Pigment-Bindemittel-Verhältnis von 4:1 (80% silanfunktionalisiertes Pigment) erhalten wurde. Anschließend wird Netzmittel (Novec FC-4430 der Fa. 3M) in einer Menge von 0,1 Gew.-%, bezogen auf die Streichmasse hinzugegeben.

Die Streichmasse wurde mit Hilfe eines Laborstreichtisches (Erichsen Coatmaster) so auf einen temporären Träger (Ultracast Adva Patina der Firma Sappi Europe) appliziert, dass nach dem vollständigen Abtrocknen des Lösungsmittels in einem Trockenschrank bei 90 °C eine Beschichtung mit einer Dicke von ca. 20 µm erhalten wurde.

Diese Beschichtung ließ sich leicht von Hand von dem Trägerpapier abziehen. Die Abzugskraft nach FTM3 betrug 3,2 N/50 mm. Der dann freitragende Separator wurde physikalisch und elektrochemisch charakterisiert (Tabelle 1).

### Beispiel 3

Es wurde die in Beispiel 2 beschriebenen Beschichtungsdispersion verwendet, wobei der Anteil des organischen Bindemittels auf 18 % reduziert wurde. Diese Dispersion wurde statt auf einen temporären Träger mittels eines Rollrakels auf einen kommerziell erhältlichen mikroporösen Polypropylen(PP)-Separator mit einer Dicke von 20 µm und einer Porosität von 55 % aufgetragen und in einem Trockenschrank bei 90 °C getrocknet, so dass eine Beschichtung mit einer Dicke von 6 µm erhalten wurde. Die Beschichtung zeigte eine gute Haftung auf dem Trägermaterial und löste sich auch nicht bei mechanischer Beanspruchung von demselben, z.B. beim Knicken des Separators. Dieser aus zwei Schichten bestehende Separator wurde physikalisch und elektrochemisch charakterisiert (Tabelle 1).

Gegenüber einem unbeschichteten Polypropylen-Separator (Vergleichsbeispiel 2) konnte die thermische Schrumpfung bei 150 °C deutlich reduziert werden. Der unbeschichtete PP-Separator ist bei dieser Temperatur geschmolzen und hat seine ursprüngliche Form vollständig verloren.

### Beispiel 4

Ausgehend von 150 g synthetischem Böhmit-Pigment wurde ein funktionalisiertes Aluminiumoxidhydroxid wie in Beispiel 1 beschrieben hergestellt, wobei jedoch ein Pigment mit einer Kristallitgröße von 40 nm (Disperal HP 40 der Fa. Sasol, Hamburg, Deutschland) verwendet wurde. Der gravimetrisch ermittelte Funktionalisierungsgrad betrug 8,9 %.

Das funktionalisierte Aluminiumoxidhydroxid-Pigment wurde in Toluol aufgeschlämmt und mittels Ultraschallhomogenisator vordispergiert (Feststoffgehalt 30%). Anschließend wurde die Mischung in einer Perlmühle dispergiert, so dass eine stabile Dispersion mit einer mittleren Teilchengröße von ca. 370 nm (d50 Wert) erhalten wurde.

Diese Pigmentdispersion wurde anschließend unter Rühren mit einer Bindemittellösung eines Ethylen-Vinylacetat-Copolymeren (Bezeichnung: Levapren 500 der Fa. Lanxess, Leverkusen, Deutschland) in Toluol mit einem Feststoffgehalt von 4,6 % versetzt, so dass eine Streichmasse mit einem Feststoffgehalt von ca. 15,0 % bei einem Pigment-Bindemittel-Verhältnis von 82:18 erhalten wurde.

Diese Beschichtungsdispersion wurde mittels Tauchverfahren und Abquetschen der Beschichtung mittels Walzen auf einen kommerziell erhältlichen mikroporösen Polypropylen(PP)-Separator mit einer Dicke von 20 µm und einer Porosität von 55 % beidseitig beschichtet und daraufhin in einem Trockenschrank bei 90 °C getrocknet, so dass eine Beschichtungsdicke von 4 µm auf jeder Seite erhalten wurde. Die Beschichtungen zeigten eine gute Haftung auf dem Trägermaterial und lösten sich auch nicht bei mechanischer Beanspruchung von demselben. Dieser aus drei Schichten bestehende Separator wurde physikalisch und elektrochemisch charakterisiert (Tabelle 1).

### Beispiel 5

Die in Beispiel 1 beschriebenen Beschichtungsdispersion wurde statt auf einen temporären Träger mittels eines Rollrakels auf einen kommerziell erhältlichen mikroporösen Polypropylen(PP)-Separator mit einer Dicke von 20 µm und einer Porosität von 55 % aufgetragen und anschließend in einem Trockenschrank bei 110 °C getrocknet, so dass eine Beschichtungsdicke von 4 µm erhalten wurde. Anschließend wurde die andere Seite des PP-Separators mit der in Beispiel 2 beschriebenen Beschichtungsdispersion mittels eines Rollrakels beschichtet und anschließend in einem Trockenschrank bei 90 °C getrocknet, so dass eine Beschichtungsdicke von 4 µm erhalten wurde. Die Beschichtungen zeigten eine gute Haftung auf dem Trägermaterial und lösten sich auch nicht bei mechanischer Beanspruchung von demselben. Dieser aus drei unterschiedlichen Schichten bestehende Separator wurde physikalisch und elektrochemisch charakterisiert (Tabelle 1), wobei die erste Beschichtung zur Kathodenseite eingebaut wurde.

### Beispiel 6

Ausgehend von 150 g synthetischem Böhmit-Pigment wurde ein funktionalisiertes Aluminiumoxidhydroxid wie in Beispiel 1 beschrieben hergestellt, wobei jedoch ein Pigment mit einer Kristallitgröße von 18 nm (Disperal HP18 der Fa. Sasol, Hamburg, Deutschland)verwendet wurde. Der gravimetrisch ermittelte Funktionalisierungsgrad betrug 16,0%. Das funktionalisierte Pigment wurde wie in Beispiel 1 zur Beschichtungsdispersion weiterverarbeitet, jedoch mit 18% Bindemittelanteil.

Die Beschichtungsdispersion wurde statt auf einen temporären Träger mittels eines Rollrakels auf einen kommerziell erhältiches poröses Aramidpapier (Twaron der Fa. Teijin, Osaka, Japan), bestehend aus Poly(p-phenylenterephthalamid)-Fasern mit einer Dicke von 28 µm, einer Porosität von 70% und einem mittleren Porendurchmesser von 270 µm beschichtet und daraufhin in einem Trockenschrank bei 120 °C getrocknet, so dass eine Beschichtungsdicke von 5 µm erhalten wurde. Die Beschichtung zeigte eine gute Haftung auf dem Trägermaterial und löste sich auch bei mechanischer Beanspruchung nicht von demselben. Dieser aus zwei Schichten bestehende Separator wurde physikalisch und elektrochemisch charakterisiert (Tabelle 1).

Aufgrund des hohen Schmelzpunktes des Polyaramides war ein Shut-Down bis 150 °C nicht festzustellen. Der Separator weist eine hohe mechanische und thermische Stabilität auf. Die Beschichtung weist eine wesentlich geringere Porengröße auf als das Aramidpapier. Dies trägt zur Sicherheit dieses Separators bei, da Kurzschlüsse durch Lithium-Dendriten, die durch den Separator wachsen könnten, verhindert werden.

### Beispiel 7

Die Beschichtungsdispersion aus Beispiel 2 wurde statt auf einen temporären Träger mittels eines Gießrakels auf ein auf einem Trägerpapier mit Releaseschicht aus Silikon aufgebrachtes 11 µm dickes Elektrospinnvlies aus PVDF-Homopolymer der Fa. Toptec (Gumi, Südkorea) mit einer Faserdicke von ca. 100 nm aufgebracht und daraufhin in einem Trockenschrank bei 100 °C getrocknet, so dass ein Auftragsgewicht von 8,3 g/m² erhalten wurde. Der erhaltene 2-lagige Separator kann mit geringer Kraft vom Silikonpapier abgelöst werden. Die Beschichtung zeigt eine gute Haftung auf dem PVDF-Trägermaterial und löste sich auch bei mechanischer Beanspruchung nicht von demselben. Dieser aus zwei Schichten bestehende Separator wird physikalisch und elektrochemisch charakterisiert (Tabelle 1).

Der Separator weist eine gute mechanische, thermische und elektrochemische Stabilität auf. Ein Shut-Down-Effekt tritt bis zu einer Temperatur von 150°C wegen des hohen Schmelzpunktes von PVDF (ca. 170°C) nicht auf.

### Beispiel 8

Das funktionalisierte Aluminiumoxidhydroxid-Pigment aus Beispiel 1 wurde in einer Mischung aus Toluol und Methylethylketon im Gewichtsverhältnis 1:2 aufgeschlämmt und mittels Ultraschallhomogenisator vordispergiert (Feststoffgehalt 30%). Anschließend wurde die Mischung in einer Perlmühle dispergiert, so dass eine stabile Dispersion mit einer mittleren Teilchengröße von ca. 350 nm (d50 Wert) erhalten wurde.

Diese Pigmentdispersion wurde anschließend unter Rühren mit einer Bindemittellösung eines Polyacrylatcopolymeren, erhältlich unter der Bezeichnung KH-LT von Hitachi Chemical Europe (Düsseldorf, Deutschland), in einem 1:1 (w/w) Toluol/MEK-Gemisch mit einem Feststoffgehalt von 5,5 % versetzt, so dass eine Streichmasse mit einem Feststoffgehalt von ca. 15,8 % bei einem Pigment-Bindemittel-Verhältnis von 4:1 erhalten wurde.

Diese Beschichtungsdispersion wurde mittels Tauchverfahren und Abquetschen der Beschichtung mittels Walzen in ein kommerziell erhältliches Polyethylentherephtalat-Vlies mit einer Dicke von 30 µm und einer Porosität von 75% beidseitig imprägniert und daraufhin in einem Trockenschrank bei 90 °C getrocknet, so dass eine Beschichtungsmenge von 24 g/m² resultiert. Dieser aus imprägnierten Vliesstoff bestehende Separator wurde physikalisch und elektrochemisch charakterisiert (Tabelle 1).

Der Separator weist eine gute mechanische, thermische und elektrochemische Stabilität auf. Ein Shut-Down-Effekt tritt bis zu einer Temperatur von 150 °C wegen des hohen Schmelzpunktes von PET nicht auf.

### Beispiel 9

Die Beschichtungsdispersion aus Beispiel 4 wurde mittels eines Gießrakels auf die Graphit-Seite einer Anode der Fa. MTI aufgetragen und bei 90 °C getrocknet. Die Dicke der getrockneten Beschichtung betrug 20 µm. Da die Elektrode eine Kupferfolie aufweist, konnten einige Eigenschaften des mit Separator beschichteten Elektrodenmaterials nicht bestimmt werden (Tabelle 1). Jedoch kann das beschichtete Anodenmaterial im elektrochemischen Test verwendet werden, ohne dass eine weitere Separatorschicht eingesetzt werden muss. Hierfür wurde die Batteriezelle, bestehend aus Kathode und beschichteter Anode, wie oben beschrieben aufgebaut und getestet.

### Beispiel 10

Die Beschichtungsdispersion aus Beispiel 4 wurde mittels eines Gießrakels auf die LiCoO₂-Seite der Kathode der Fa. MTI aufgetragen und bei 90 °C getrocknet. Die Dicke der getrockneten Beschichtung betrug 20 µm. Da die Elektrode eine Aluminiumfolie aufweist, konnten einige Eigenschaften des mit Separator beschichteten Elektrodenmaterials nicht bestimmt werden (Tabelle 1). Jedoch kann das beschichtete Kathodenmaterial im elektrochemischen Test verwendet werden, ohne dass eine weitere Separatorschicht eingesetzt werden muss. Hierfür wird die Batteriezelle, bestehend aus Anode und beschichteter Kathode, wie oben beschrieben aufgebaut und getestet.

### Beispiel 11

Die Beschichtungsdispersion aus Beispiel 4 wurde mittels eines Gießrakels jeweils auf die LiCoO₂-Seite der Kathode und auf die Graphit-Seite der Anode, beide von der Fa. MTI, beschichtet und bei 90 °C getrocknet. Die Dicke der trockenen Beschichtung betrug jeweils 10 µm. Aus den beiden beschichteten Elektroden wurde die Batteriezelle, bestehend aus Anode und beschichteter Kathode, wie oben beschrieben aufgebaut und getestet. Die Elektroden sind durch die beiden Separatorschichten sicher getrennt und können ohne großen Kapazitätsverlust (< 10%) zyklisiert werden (Tabelle 1).

### Vergleichsbeispiel 1

Die Funktionalisierung der Aluminiumoxidhydroxid-Partikel wurde wie in Beispiel 1 beschrieben vorgenommen, außer dass die Mischung nach Zugabe der Silane nur 2 Stunden zum Rückfluss erhitzt wurde. Nach Aufarbeitung der Pigmente wurde ein Funktionalisierungsgrad von 1,5% gravimetrisch bestimmt. Das funktionalisierte Aluminiumoxidhydroxid-Pigment wurde in einer Mischung aus N-Ethylpyrrolidon und Methylethylketon im Gewichtsverhältnis 1,8:1 aufgeschlämmt und mittels Ultraschallhomogenisator vordispergiert (Feststoffgehalt 36%). Eine stabile Dispersion konnte in einer Perlmühle nicht erzielt werden; vielmehr setzte sich das Pigment schnell ab, was auf eine ungenügende Dispergierung, also grobe Pigmentteilchen, schließen lässt. Die Teilchengrößenverteilung, bestimmt mittels Laserbeugung, ergab eine Teilchengröße von im Mittel 8 µm mit einer breiten Teilchengrößenverteilung. Nach Zugabe zur Bindemittellösung wurde die Beschichtung wie in Beispiel 1 beschrieben durchgeführt. Die getrocknete Beschichtung war sehr rauh und wies nur eine so geringe Festigkeit auf, dass sie beim Versuch des Abziehens vom temporären Träger riss. Weitere Tests als Separator waren mit dieser Beschichtung nicht möglich (Tabelle 2).

### Vergleichsbeispiel 2

Ein kommerziell erhältlicher mikroporöser Polypropylen(PP)-Separator mit einer Dicke von 20 µm und einer Porosität von 55 % zeigt nur sehr langsame Benetzung mit Elektrolyt im Gegensatz zu allen erfindungsgemäßen freitragenden oder beschichteten Separatorren. Weiterhin ist der Separator schon bei 150 °C so instabil, dass ein Kurzschluss in einer elektrochemischen Zelle auftreten kann. Die etwas geringere Batterie-restkapazität nach 100 Zyklen ist vermutlich auf die schlechtere Benetzung zurückzuführen (Tabelle 2).

### Vergleichsbeispiel 3

Böhmit-Pigment mit einer Kristallitgröße von 14 nm (Sasol Disperal HP14) wurde in essigsaurem Wasser (2%ige Essigsäure) zu einer stabilen Dispersion mit 35 Gew.% Feststoffgehalt unter Rühren dispergiert. Diese Dispersion wurde mit einer 8 Gew.%igen Polyvinylalkohol-Lösung (Mowiol 26/88 der Fa. Kuraray, Japan) versetzt, so dass eine Beschichtungsdispersion mit einem Bindemittel- / Pigment-Verhältnis von 85:15 erhalten wurde. Zur besseren Benetzung wurden 5 Gew.-% Isopropanol zugegeben.

Diese Beschichtungsdispersion wurde mit Hilfe eines Laborstreichtisches (Erichsen Coatmaster) so auf einen temporären Träger (Ultracast Adva Patina der Firma Sappi Europe) appliziert, dass nach dem vollständigen Entfernen des Wassers in einem Trockenschrank bei 90 °C eine Beschichtung mit einer Dicke von ca. 20 µm erhalten wurde.

Diese Beschichtung ließ sich leicht von Hand von dem Trägerpapier abziehen. Die Abzugskraft nach FTM3 betrug 3,0 N/50 mm. Der dann freitragende Separator wurde physikalisch und elektrochemisch charakterisiert (Tabelle 2). Der Elektrolyt benetzt den Separator spontan, jedoch tritt nach kurzer Zeit (1 Stunde) eine bräunliche Verfärbung des Separators ein. Auch bei höheren Temperaturen im Rahmen der Schrumpfungstest wurde eine Verfärbung beobachtet. Diese Verfärbung wie auch die stärkere Abnahme der Batteriekapazität zeigen an, dass dieser Separator im Elektrolyten chemisch nicht stabil zu sein scheint.

**Tabelle 1**

| **Eigenschaft** | **Einheit** | **Bsp. 1** | **Bsp. 2** | **Bsp. 3** | **Bsp. 4** | **Bsp. 5** | **Bsp 6** | **Bsp. 7** | **Bsp. 8** | **Bsp. 9** | **Bsp. 10** | **Bsp. 11** |
|---|---|---|---|---|---|---|---|---|---|---|---|---|
| Kristallitgröße AIOOH | nm | 100 | 100 | 100 | 40 | 100/100 | 18 | 100 | 100 | 35 | 35 | 35 |
| Funktionalisierung | % | 4,7 | 5,2 | 5,2 | 8,9 | 4,7/5,2 | 16 | 5,2 | 4,7 | 8.9 | 8,9 | 8,9 |
| mittlere Teilchengröße Dispersion | nm | 650 | 680 | 680 | 350 | 650/680 | 178 | 680 | 680 | 350 | 350 | 350 |
| Bindemittelanteil | % | 20 | 20 | 18 | 18 | 20/20 | 18 | 20 | 20 | 18 | 18 | 18 |
| Dicke (Flächengewicht) der Beschichtung | µm | 20 | 20 | 6 | 4/4 | 4/4 | 5 | (8,3 g/m²) | (24 g/m²) | 20 | 20 | 10/10 |
| Benetzung | - | spontan | spontan | spontan | spontan | spontan | spontan | spontan | spontan | spontan | spontan | spontan |
| Reißdehnung längs/quer | % | 15 | >200 | 45/22 | 45/23 | 48/25 | 23/34 | 82/102 | 60/65 | - | - | - |
| E-Modul längs/quer | MPa | 1600/ 1550 | 45/48 | 500/600 | 400/450 | 400/500 | 1800/ 1550 | 72/74 | 120/153 | - | - | - |
| Gurley-Porosität | s/100 ml | 900 | 1150 | 890 | 650 | 520 | 250 | 110 | 750 | - | - | - |
| Porosität (Gesamt) | % | 48 | 49 | 52 | 51 | 48 | 61 | 50 | 52 | - | - | - |
| Porendurchmesser (Beschichtung | nm | 90 | 92 | 92 | 42 | 90/92 | 30 | 140 | 90 | 42 | 42 | 42 |
| McMullin-Zahl | - | 11 | 9 | 8 | 11 | 10 | 6 | 4 | 11 | - | - | - |
| thermische Schrumpfung längs/quer bei 150 °C | % | < 0,1/ < 0,1 | < 0,1/ < 0,1 | 3,8/5,0 | 2,5/3,8 | 3,5/4,8 | 0,9/0,6 | 7,5/9,0 | 5,5/6,8 | - | - | - |
| thermische Schrumpfung längs/quer bei 200 °C | % | 0,3/0,3 | 0,3/0,3 | geschmolzen | geschmolzen | geschmolzen | 1,5/1,1 | stark geschrumpft | stark geschrumpft | - | - | - |
| Shut-Down Temperatur | °C | >150 | >150 | 130 | 130 | 130 | >150 | >150 | >150 | - | - | - |
| Batterie-Restkapazität | % | 94 | 92 | 91 | 92 | 92 | 87 | 95 | 89 | 91 | 93 | 93 |

**Tabelle 2**

| **Eigenschaft** | **Einheit** | **VergleichsBeispiel 1** | **VergleichsBeispiel 2** | **VergleichsBeispiel 3** |
|---|---|---|---|---|
| Kristallitgröße AIOOH | nm | 18 | - | 14 |
| Funktionalisierung | % | 1,8 | - | 6 |
| mittlere Teilchengröße Dispersion | nm | nicht dispergierbar | - | 81 |
| Bindemittelanteil | % | 20 | - | 15 |
| Dicke (Beschichtung) | µm | 20 | 20 | 20 |
| Benetzung | - | nicht messbar | mehrere Stunden | spontan; Braunverfärbung |
| Reißdehnung längs/quer | % | nicht messbar | 45/22 | 5 |
| E-Modul längs/quer | MPa | nicht messbar | 500/600 | 1100/1250 |
| Gurley-Porosität | s/100 ml | nicht messbar | 300 | 870 |
| Porosität (Gesamt) | % | nicht messbar | 55 | 50 |
| Porendurchmesser | nm | nicht messbar | 100 | 28 |
| McMullin-Zahl | - | nicht messbar | 6 | 14 |
| thermische Schrumpfung längs/quer bei 150 °C | % | nicht messbar | geschmolzen (»5%) | < 0,1/ < 0,1 Verfärbung |
| thermische Schrumpfung längs/quer bei 200 °C | % | nicht messbar | geschmolzen | 1,5/1,5 starke Verfärbung |
| Shut-Down Temperatur | °C | nicht messbar | 120 | - |
| Batterie-Restkapazität | % | nicht messbar | 88 | 78 |

## Patentansprüche

1. Separator für eine elektrochemische Zelle, vorzugsweise eine Lithium-lonen-Batterie, umfassend eine poröse Schicht, welche mindestens ein organisches Bindemittel und mindestens ein funktionalisiertes Aluminiumoxidhydroxid der allgemeinen Formel AlOOH umfasst, wobei das Aluminiumoxidhydroxid an seiner Oberfläche mit mindestens 2,5 Gew.-% mindestens einer siliziumhaltigen organischen Verbindung funktionalisiert ist, bezogen auf das Gewicht von Aluminiumoxidhydroxid (berechnet als AlOOH), und das Gewichtsverhältnis von funktionalisiertem Aluminiumoxidhydroxid zu Bindemittel im Bereich von 1,5:1 bis 20:1 liegt, ausgenommen einen Separator, der
i. ein lineares Styrol-Ethylen/Butylen-Styrol-(SEBS)-Triblockcopolymer mit einem Anteil an Styrol-Blöcken von 30 bis 33 Gew-%, bezogen auf das Gesamtgewicht des Blockcopolymers und einer Lösungsviskosität von 1,4 bis 2,0 mPas in einer 10 Gew.%igen Lösung in Toluol als organisches Bindemittel und
ii. ein Böhmit-Pigment mit einer Kristallitgröße von 35 - 45 nm, welches an seiner Oberfläche durch Umsetzung mit Phenylmethyldimethoxysilan bei einem Verhältnis von Böhmit zu Silan von 1,36:1 funktionalisiert wurde,
in einem Verhältnis von funktionalisiertem Aluminiumoxidhydroxid (ii) zu organischem Bindemittel (i) von 3,57 : 1 umfasst.

2. Separator gemäß Anspruch 1, wobei die Dicke der porösen Schicht 1 bis 100 µm, bevorzugt 3 bis 50 µm und besonders bevorzugt 10 µm bis 30 µm beträgt und/oder die Kristallitgröße des funktionalisierten Aluminiumoxidhydroxids 10 bis 250 µm, bevorzugt 30 bis 150 nm beträgt.

3. Separator gemäß einem der vorhergehenden Ansprüche, wobei die Porosität des Separators 30% bis 70%, bevorzugt 40% bis 60% und der Porendurchmesser 10 nm bis 300 µm, bevorzugt 50 bis 200 µm, jeweils gemessen mittels Quecksilberporosimetrie nach DIN 66133, und/oder die Luftdurchlässigkeit des Separators nach Gurley, gemessen gemäß ASTM D726-94, 100 ml/100 s bis 3000 ml/100 s beträgt.

4. Separator gemäß einem der vorhergehenden Ansprüche, wobei das oder mindestens eines der Aluminiumoxidhydroxide ausgewählt ist aus der Gruppe, enthaltend natürlich vorkommende und synthetische Aluminiumoxidhydroxide, bevorzugt aus der Gruppe, bestehend aus Diaspor, Böhmit und Pseudoböhmit, wobei das Aluminiumoxidhydroxid besonders bevorzugt mindestens ein synthetisches Böhmit umfasst.

5. Separator gemäß einem der vorhergehenden Ansprüche, wobei die oder mindestens eine der zur Funktionalisierung der Oberfläche des Aluminiumoxidhydroxids verwendete(n) siliziumhaltige(n) organische(n) Verbindungen mindestens eine Organosiliziumverbindung darstellt, bevorzugt eine mindestens Organosiliziumverbindung der Formel (I)
RₙSiX₄₋ₙ (I),
worin R einen organischen Rest darstellt, der über eine Kohlenstoff-Siliziumbindung an das Siliziumatom gebunden ist, bevorzugt ausgewählt aus der Gruppe, enthaltend ggf. substituierte, gesättigte und ungesättigte, lineare und verzweigte, acyclische und cyclische, aliphatische sowie aromatische Kohlenwasserstoffe und Heteroaromaten und fluorierte Kohlenwasserstoffe, und X eine Abgangsgruppe darstellt, die bevorzugt ausgewählt ist aus der Gruppe, bestehend aus Alkoxygruppen, Acetoxygruppen, Aminogruppen und Halogeniden und n eine ganze Zahl von 1 bis 3 darstellt, wobei die einzelnen organischen Reste und / oder Abgangsgruppen in einer Verbindung unabhängig voneinander gleich oder verschieden sein können.

6. Separator gemäß einem der vorhergehenden Ansprüche, wobei das Aluminiumoxidhydroxid an seiner Oberfläche mit 2,5 bis 80 Gew.-%, bevorzugt 3 bis 30 Gew.-% und insbesondere 4 bis 20 Gew.-% mindestens einer siliziumhaltigen organischen Verbindung funktionalisiert ist.

7. Separator gemäß einem der vorhergehenden Ansprüche, wobei das organische Bindemittel mindestens ein Polymer mit einer Glasübergangstemperatur T₉ ≤ 70 °C, bevorzugt T_{g} < 50 °C umfasst, wobei dieses Polymer weiterhin bevorzugt ein Copolymer darstellt, welches besonders bevorzugt ausgewählt ist aus der Gruppe, bestehend aus Polyvinylidenfluorid und dessen Copolymeren, Ethylen-Copolymeren, bevorzugt Copolymeren von Ethylen mit Butylacrylat und / oder Vinylacetat, Triblockcopolymeren, bevorzugt solchen mit Styrol-Endblöcken oder (Methacrylat)-Triblockcopolymere, Polyacrylatcopolymeren, Styrol-Butadien-Copolymeren, Acrylnitril-Butadien-Styrol-Copolymeren und Acrylnitril-Butadien-Copolymeren.

8. Separator gemäß einem der vorhergehenden Ansprüche, wobei das organische Bindemittel eine oder mehrere funktionelle Gruppen aufweist, welche bevorzugt ausgewählt sind aus der Gruppe, enthaltend olefinische Doppelbindungen, Hydroxylgruppen, Aminogruppen, Epoxidgruppen, Isocyanatgruppen, Acetoacetatgruppen, Carbonsäuregruppen, deren Salze und Mischungen derselben.

9. Separator gemäß einem der vorhergehenden Ansprüche, wobei der Separator ein freitragender Separator, umfassend eine freitragende poröse Schicht, ist und der E-Modul der freitragenden porösen Schicht bevorzugt mindestens 30 MPa, weiterhin bevorzugt mindestens 100 MPa und insbesondere mindestens 500 MPa ist und/oder die Reißdehnung bevorzugt mindestens 2%, weiterhin bevorzugt mindestens 5% und besonders bevorzugt mindestens 10% ist und/oder die Bruchlast bevorzugt im Bereich von 0,5 bis 50 MPa und besonders bevorzugt im Bereich von 1 bis 10 MPa liegt.

10. Separator gemäß einem der Ansprüche 1 bis 8, wobei der Separator auf ein Trägermaterial aufgebracht ist, welches bevorzugt ausgewählt ist aus der Gruppe, enthaltend Anoden, Anodenmaterial, Kathoden, Kathodenmaterial, poröse Trägermaterialien wie mikroporöse Kunststoffseparatoren, Vliese, synthetisches Papier, Gewebe oder Mischungen derselben.

11. Separator gemäß einem der vorhergehenden Ansprüche, wobei der Anteil an reinem Aluminiumoxidhydroxid (AlOOH), bezogen auf das Gesamtgewicht der Schicht aus organischem Bindemittel und funktionalisiertem Aluminiumoxidhydroxid, mindestens 50 Gew.-%, bevorzugt mindestens 60 Gew.-% und besonders bevorzugt mindestens 70 Gew.-% beträgt.

12. Lithium-Ionen-Batterie, umfassend mindestens eine Anode, mindestens eine Kathode und mindestens einen Separator gemäß einem der vorhergehenden Ansprüche.

13. Verfahren zur Herstellung eines Separators für eine elektrochemische Zelle gemäß einem der Ansprüche 1 bis 11, umfassend die Herstellung einer porösen Schicht, umfassend mindestens ein organisches Bindemittel und mindestens ein mit mindestens 2,5 Gew.-% mindestens einer siliziumhaltigen organischen Verbindung funktionalisiertes Aluminiumoxidhydroxid, umfassend die folgenden Schritte:
i. Bereitstellen einer Beschichtungszusammensetzung, umfassend mindestens ein Lösungsmittel, eine Dispersion von mit mindestens 2,5 Gew.-% mindestens einer siliziumhaltigen organischen Verbindung funktionalisierten Aluminiumoxidhydroxidteilchen, bezogen auf das Gewicht von Aluminiumoxidhydroxid, in diesem Lösungsmittel sowie eine Lösung des organischen Bindemittels,
ii. Aufbringen der Beschichtungszusammensetzung auf ein Trägermaterial, um eine Beschichtung auf diesem Trägermaterial zu erhalten und
iii. Trocknen der Beschichtung durch Verdampfen des Lösungsmittels und optionales Quervemetzen des Bindemittels.

14. Verfahren gemäß Anspruch 13, wobei die zur Herstellung der Dispersion verwendeten funktionalisierten Aluminiumoxidhydroxidteilchen eine Kristallitgröße im Bereich von 10 bis 250 nm, bevorzugt 30 bis 150 nm aufweisen und/oder die in der Dispersion enthaltenen funktionalisierten Aluminiumoxidhydroxidteilchen eine mittlere Teilchengröße im Bereich von 50 nm bis 2000 nm, bevorzugt von 50 bis 1000 nm und insbesondere von 100 bis 800 nm aufweisen.

## Claims

1. Separator for an electrochemical cell, preferably a lithium-ion battery, comprising a porous layer that comprises at least one organic binding agent and at least one functionalised aluminium oxide hydroxide with the general formula AlOOH, wherein the aluminium oxide hydroxide is functionalised on its surface with at least 2.5 wt. % of at least one silicon containing organic compound, related to the weight of aluminium oxide hydroxide (calculated as A1OOH), and the weight ratio of functionalised aluminium oxide hydroxide to binding agent within a range of 1.5:1 to 20:1 with the exception of a separator that
i. comprises a linear styrol-ethylene/butylene-styrol (SEBS) triblock copolymer with a proportion of styrol blocks of 30 to 33 wt. % related to the total weight of the block copolymer and a solution viscosity of 1.4 to 2.0 mPas in a 10 wt. % solution of toluol as an organic binding agent, and
ii. comprising a Böhmit pigment with a crystallite size of 35 - 45 nm, which was functionalised on its surface through reaction with phenyl methyl dimethoxy silane at a Böhmit to silane ratio of 1.36:1,
at a ratio of functionalised aluminium oxide hydroxide (ii) to organic binding agent (i) of 3.57 :1.

2. Separator according to claim 1, wherein the thickness of the porous layer is 1 to 100 µm, preferably 3 to 50 µm, and particularly preferably 10 µm to 30 µm and/or the crystallite size of the functionalised aluminium oxide hydroxide is 10 to 250 nm, preferably 30 to 150 nm.

3. Separator according to one of the preceding claims, wherein the porosity of the separator is 30% to 70%, preferably 40% to 60% and the pore diameter 10 nm to 300 nm, preferably 50 to 200 nm, each measured by means of mercury porosimetry according to DIN 66133 and/or the air permeability of the separator according to Gurley, measured according to ASTM D726-94, 100 ml/100 s to 3000 ml/100 s.

4. Separator according to one of the preceding claims, wherein the or at least one of the aluminium oxide hydroxides is selected from the group including naturally occurring and synthetic aluminium oxide hydroxides, preferably from the group consisting of diaspore, Böhmit and pseudo-Böhmit, wherein the aluminium oxide hydroxide particularly preferably comprises at least one synthetic Böhmit.

5. Separator according to one of the preceding claims, wherein the or at least one of the silicon containing organic compound(s) represent(s) at least one organosilicon compound, preferably at least one organosilicon compound with the formula (I)
RₙSiX₄₋ₙ (I),
used for functionalising the surface of the aluminium oxide hydroxide,
wherein R represents an organic radical that is bound via a carbon-silicon binding to the silicon atom, preferably selected from the group containing possibly substituted, saturated and unsaturated, linear and branched, acyclic and cyclic, aliphatic and aromatic hydrocarbons and heteroaromates and fluorinated hydrocarbons, and X represents a leaving group that is preferably selected from the group consisting of alkoxy groups, acetoxy groups, amino groups and halogenides, and n represents an integer of 1 to 3, wherein individual organic radicals and/or leaving groups can be identical to or different from each other in a compound, independently from each other.

6. Separator according to one of the preceding claims, wherein the aluminium oxide hydroxide is functionalised on its surface with 2.5 to 80 wt. %, preferably 3 to 30 wt. % and in particular 4 to 20 wt % with at least one silicon containing organic compound.

7. Separator according to one of the preceding claims, wherein the organic binding agent comprises at least one polymer with a glass transition temperature T_{g} ≤ 70 °C, preferably T_{g} < 50 °C, wherein this polymer further preferably represents a copolymer that is particularly preferably selected from the group consisting of polyvinylidene fluoride and its copolymers, ethylene copolymers, preferably copolymers of ethylene with butylacrylate and/or vinyl acetate, triblock copolymers, preferably those with styrol end blocks or (methacrylate) triblock copolymers, polyacrylate copolymers, styrol-butadiene copolymers, acrylnitrile-butadiene styrol copolymers and acrylnitrile-butadiene copolymers.

8. Separator according to one of the preceding claims, wherein the organic binding agent includes one or more functional groups preferably selected from the group containing olefinic double bindings, hydroxyl groups, amino groups, epoxy groups, isocyanate groups, acetoacetate groups, carboxylic acid groups, their salts and mixtures thereof.

9. Separator according to one of the preceding claims, wherein the separator is an unsupported separator, comprising an unsupported porous layer, and the e-module of the unsupported porous layer is preferably at least 30 MPa, more preferably at least 100 MPa and particularly preferably at least 500 MPa and/or the elongation at break is preferably at least 2%, more preferably at least 5% and particularly preferably at least 10% and/or the breaking load preferably lies within a range of 0.5 to 50 MPa and particularly preferably within a range of 1 to 10 MPa.

10. Separator according to one of the claims 1 to 8, wherein the separator is applied onto a substrate that is preferably selected from the group including anodes, anode material, cathodes, cathode material, porous substrates such as microporous plastic separators, fleeces, synthetic paper, fabric or mixtures thereof.

11. Separator according to one of the preceding claims, wherein the proportion of pure aluminium oxide hydroxide (AlOOH) related to the total weight of the layer of organic binding agent and functionalised aluminium oxide hydroxide is at least 50 wt. %, preferably at least 60 wt. % and particularly preferably at least 70wt. %.

12. Lithium-ion battery, comprising at least one anode, at least one cathode and at least one separator according to one of the preceding claims.

13. Method for producing a separator for an electrochemical cell according to one of the claims 1 to 11, comprising the production of a porous layer, comprising at least one organic binding agent and at least one aluminium oxide hydroxide, functionalised with at least 2.5 wt. % of at least one silicon containing organic compound, comprising the following steps:
i. provision of a coating composition, comprising at least one solvent, a dispersion of aluminium oxide hydroxide particles functionalised with at least 2.5 wt. % of at least one silicon containing organic compound, related to the weight of the aluminium oxide hydroxide in this solvent, as well as a solution of the organic binding agent,
ii. application of the coating composition onto a substrate for obtaining a coating on this substrate, and
iii. drying the coating through evaporating the solvent and optional cross-linking of the binding agent.

14. Method according to claim 13, wherein the functionalised aluminium oxide hydroxide particles used for producing the dispersion have a crystallite size within a range of 10 to 250 nm, preferably 30 to 150 nm and/or the functionalised aluminium oxide hydroxide particles contained in the dispersion have a median particle size within a range of 50 nm to 2000 nm, preferably of 50 to 1000 nm, and in particular of 100 to 800 nm.

## Revendications

1. Séparateur pour pile électrochimique, de préférence un accumulateur lithium-ion, comportant une couche poreuse qui comprend au moins un liant organique et au moins un oxyhydroxyde d'aluminium de formule générale AlOOH fonctionnalisé, lequel oxyhydroxyde d'aluminium est fonctionnalisé, à sa surface, avec au moins 2,5 %, en poids rapporté au poids de l'oxyhydroxyde d'aluminium (calculé pour AlOOH), d'au moins un composé organique contenant du silicium, et dans laquelle couche le rapport pondéral de l'oxyhydroxyde d'aluminium fonctionnalisé au liant se situe dans l'intervalle allant de 1,5/1 à 20/1, excepté un séparateur qui comprend
i) un copolymère tribloc SEBS (styrène-éthylène/butylène-styrène) linéaire, dans lequel la proportion des blocs polystyrène vaut de 30 à 33 %, en poids rapporté au poids total du copolymère à blocs, et qui présente, en solution à 10 % en poids dans du toluène, une viscosité de solution de 1,4 à 2,0 mPa.s, en tant que liant organique,
ii) et un pigment de type boehmite comportant des cristallites de 35 à 45 nm de taille, qui a été fonctionnalisé, à sa surface, par réaction avec du phényl-méthyl-diméthoxy-silane en un rapport de la boehmite au silane de 1,36/1,
en un rapport de 3,57/1 de l'oxyhydroxyde d'aluminium fonctionnalisé (ii) au liant organique (i).

2. Séparateur conforme à la revendication 1, dans lequel l'épaisseur de la couche poreuse vaut de 1 à 100 µm, de préférence de 3 à 50 µm et en particulier de 10 à 30 µm, et/ou la taille des cristallites de l'oxyhydroxyde d'aluminium fonctionnalisé vaut de 10 à 250 nm et de préférence de 30 à 150 nm.

3. Séparateur conforme à l'une des revendications précédentes, dont la porosité vaut de 30 % à 70 % et de préférence de 40 % à 60 %, et dans lequel le diamètre des pores vaut de 10 nm à 300 nm et de préférence de 50 nm à 200 nm, ces deux paramètres étant mesurés par porosimétrie au mercure selon la norme DIN 66133, et/ou duquel séparateur la perméabilité à l'air définie selon Gurley, mesurée selon la norme ASTM D726-94, vaut de 100 mL/100 s à 3000 mL/100 s.

4. Séparateur conforme à l'une des revendications précédentes, dans lequel l'oxyhydroxyde d'aluminium, ou au moins l'un des oxyhydroxydes d'aluminium, est choisi dans l'ensemble comprenant les oxyhydroxydes d'aluminium naturels et les oxyhydroxydes d'aluminium synthétiques, et de préférence dans l'ensemble constitué par les diaspore, boehmite et pseudoboehmite, étant entendu qu'il est particulièrement préférable que l'oxyhydroxyde d'aluminium comprenne au moins une boehmite synthétique.

5. Séparateur conforme à l'une des revendications précédentes, dans lequel le composé organique contenant du silicium qui est utilisé pour fonctionnaliser la surface de l'oxyhydroxyde d'aluminium, ou au moins l'un de ces composés, est au moins un composé organo-silicique, et de préférence au moins un composé organo-silicique de formule (I) :
RₙSiX₄₋ₙ (I)
dans laquelle R représente un reste organique, lié à l'atome de silicium par une liaison carbone-silicium et choisi de préférence dans l'ensemble comprenant les groupes, en option porteurs de substituant(s), dérivés des hydrocarbures aliphatiques saturés ou insaturés, linéaires ou ramifiés, cycliques ou acycliques, ainsi que des hydrocarbures aromatiques, des composés hétéroaromatiques et des hydrocarbures fluorés, X représente un groupe partant, choisi de préférence dans l'ensemble formé par les groupes alcoxy, acétoxy et amino et les atomes d'halogène, et l'indice n est un nombre entier valant de 1 à 3, étant entendu que les restes organiques et/ou les groupes partants individuels peuvent être, au sein d'un composé et indépendamment les uns des autres, identiques ou différents.

6. Séparateur conforme à l'une des revendications précédentes, dans lequel l'oxyhydroxyde d'aluminium est fonctionnalisé, à sa surface, avec de 2,5 à 80 % en poids, de préférence de 3 à 30 % en poids et en particulier de 4 à 20 % en poids d'au moins un composé organique contenant du silicium.

7. Séparateur conforme à l'une des revendications précédentes, dans lequel le liant organique comprend au moins un polymère qui présente une température de transition vitreuse Tv inférieure ou égale à 70 °C, et de préférence inférieure à 50 °C, étant entendu qu'en outre, ce polymère est de préférence un copolymère, lequel est choisi, avec une préférence particulière, dans l'ensemble formé par le poly(fluorure de vinylidène) et ses copolymères, les copolymères d'éthylène, de préférence les copolymères d'éthylène et d'acrylate de butyle et/ou d'acétate de vinyle, les copolymères triblocs, de préférence ceux qui comportent des blocs terminaux de polystyrène ou les copolymères triblocs de méthacrylate, les copolymères de type polyacrylate, les copolymères de styrène et de butadiène, les copolymères d'acrylonitrile, de butadiène et de styrène, et les copolymères d'acrylonitrile et de butadiène.

8. Séparateur conforme à l'une des revendications précédentes, dans lequel le liant organique comporte un ou plusieurs groupe(s) fonctionnel(s), qui est ou sont de préférence choisi(s) dans l'ensemble comprenant des doubles liaisons éthyléniques et des groupes amino, hydroxyle, époxyde, isocyanate, acétoacétate, carboxyle et leurs sels, ainsi que leurs mélanges.

9. Séparateur conforme à l'une des revendications précédentes, lequel séparateur est un séparateur autoportant comprenant une couche poreuse autoportante, de laquelle couche poreuse autoportante le module d'élasticité E vaut de préférence au moins 30 MPa, mieux encore au moins 100 MPa et en particulier au moins 500 MPa, et/ou l'allongement à la rupture vaut de préférence au moins 2 %, mieux encore au moins 5 % et en particulier au moins 10 %, et/ou la charge de rupture se situe dans l'intervalle allant de 0,5 à 50 MPa et en particulier dans l'intervalle allant de 1 à 10 MPa.

10. Séparateur conforme à l'une des revendications 1 à 8, lequel séparateur est appliqué sur un matériau support qui est choisi, de préférence, dans l'ensemble comprenant les anodes, les matériaux d'anode, les cathodes, les matériaux de cathode, les matériaux supports poreux tels que les séparateurs microporeux en matière plastique, les non-tissés, les papiers synthétiques, les tissus et leurs combinaisons.

11. Séparateur conforme à l'une des revendications précédentes, dans lequel la proportion d'oxyhydroxyde d'aluminium pur (AlOOH), en poids rapporté au poids total de la couche constituée du liant organique et de l'oxyhydroxyde d'aluminium fonctionnalisé, vaut au moins 50 %, de préférence au moins 60 %, et en particulier au moins 70 %.

12. Accumulateur lithium-ion comprenant au moins une anode, au moins une cathode et au moins un séparateur conforme à l'une des revendications précédentes.

13. Procédé de fabrication d'un séparateur pour pile électrochimique, conforme à l'une des revendications 1 à 11, comportant le fait de préparer une couche poreuse qui comprend au moins un liant organique et au moins un oxyhydroxyde d'aluminium fonctionnalisé avec au moins 2,5 % en poids d'au moins un composé organique contenant du silicium, lequel procédé comporte les étapes suivantes :
i) préparer une composition de revêtement comprenant au moins un solvant, des particules, dispersées dans ce solvant, d'oxyhydroxyde d'aluminium fonctionnalisé avec au moins 2,5 %, en poids rapporté au poids d'oxyhydroxyde d'aluminium, d'au moins un composé organique contenant du silicium, et une solution du liant organique,
ii) déposer la composition de revêtement sur un matériau support, afin d'obtenir un revêtement sur ce matériau support,
iii) et faire sécher ce revêtement par évaporation du solvant, et en option, faire réticuler le liant.

14. Procédé conforme à la revendication 13, dans lequel les particules d'oxyhydroxyde d'aluminium fonctionnalisé utilisées pour la préparation de la dispersion présentent une taille de cristallites comprise dans l'intervalle allant de 10 à 250 nm et de préférence de 30 à 150 nm, et/ou les particules d'oxyhydroxyde d'aluminium fonctionnalisé contenues dans la dispersion présentent une taille moyenne de particules comprise dans l'intervalle allant de 50 à 2000 nm, de préférence de 50 à 1000 nm, et en particulier de 100 à 800 nm.
